(19) Europäisches Patentamt
European Patent Office
Office européen des brevets

(11) **EP 4 604 080 A1**

(12) **EUROPEAN PATENT APPLICATION**

(43) Date of publication:
**20.08.2025 Bulletin 2025/34**

(21) Application number: **24192036.2**

(22) Date of filing: **31.07.2024**

(51) International Patent Classification (IPC):
*G06V 10/82* *(2022.01)*

(52) Cooperative Patent Classification (CPC):
**G06V 10/82**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.02.2024 IN 202411010321**

(71) Applicant: **FUJITSU LIMITED
Kawasaki-shi, Kanagawa 211-8588 (JP)**

(72) Inventors:
• **DHARAMSHI, Nimish Mahendra
560037 Bangalore (IN)**
• **KASU, Venkata Siva Sai Vara Prasad
560037 Bangalore (IN)**
• **YAMADA, Moyuru
560037 Bangalore (IN)**

(74) Representative: **Haseltine Lake Kempner LLP
Cheapside House
138 Cheapside
London EC2V 6BJ (GB)**

(54) **A METHOD FOR GENERATING STRUCTURED TEXT DESCRIBING AN IMAGE**

(57) A computer implemented method for generating structured text describing an image comprising extracting items from the image, encoding the extracted items, generating a domain embedding from a predicted domain of the image, predicting a relation between two items in the image by decoding the encoded extracted items and the domain embedding, and classifying the two items and the predicted relation to form the structured text as a triplet.

FIG. 5

**Description**

**Field of the invention**

The present invention relates to a computer-implemented method, computer program and information processing apparatus for generating structured text describing an image.

**Background of the Invention**

In the field of computer vision, image recognition has seen incredible developments in recent years. In particular, neural networks have become popular for recognising objects in images and generating structured text such as scene graphs from the images.

Scene graph generation (SGG) may be used for tasks such as Visual Question and Answer VQA, image editing and action recognition. However, scene graph recognition models are often trained on labelled images with a bias towards common object relationships. That is, labelled images often focus on simple descriptors such as "on", "in", "by", for describing subject-object relationships. The number of simple descriptors in large databases often far exceed meaningful and contextually rich predicates for describing object-subject pairs. The predictions of SGG models trained with these imbalanced data distributions, which are biased towards simple, 'coarse-grained' descriptions result in less informative scene graphs.

While simple descriptors may correctly label object relationships, they provide little, to no, context to the image. This leads to simple scene graph triplets lacking meaningful relations between objects. These simple scene graphs therefore have limited use in downstream tasks such as VQA which requires rich semantic representations.

Common works attempt to un-bias scene graphs by focusing on long tail predicate distributions. That is, the more rich, 'fine-grained' descriptions such as 'riding on', 'selling', 'standing on'. However, the inventors found that these techniques may disturb overall model performance. For example, the simple head predicates in the distributions are often also found in the more meaningful tail predicates, for instance 'on' in 'standing on'. Hence, by focusing on un-biasing the long-tail predicates, by overfitting, or by underfitting head predicates, the scene graph model may be adversely affected. It is therefore desirable to generate contextually meaningful predicates using an SGG method.

**Summary of the Invention**

The invention is defined in the independent claims, to which reference should now be made. Further features are set out in the dependent claims.

According to an aspect of the invention there is provided a computer-implemented method for generating structured text describing an image comprising extracting items from the image, encoding the extracted items, generating a domain embedding from a predicted domain of the image, predicting a relation between two items in the image by decoding the encoded extracted items and the domain embedding, and classifying the two items and the predicted relation to form the structured text as a triplet. The method may further comprise outputting the structed text.

The method may include a further step of predicting the predicted domain of the image. The step of extracting the items from the image may be performed using a feature extractor. The extracted items may be encoded using an image encoder. The step of predicting a relation between the two items in the image based on the encoded extracted items and the domain embedding may be performed by a decoder (image decoder).

The step of outputting the structured text may comprise outputting the structured text on a user display. The output may be from a graphical user interface. For example, the image may be input by a user entry on a graphical user interface. The user may optionally provide a predicted domain with the image, or the method may include predicting the domain.

The scene graph triplet on the user display may be represented as an overlay on the image with bounding boxes around items in the image to indicate a subject and an object, and a link between the subject and the object. The subject and/or object and/or link may optionally be labelled.

The relation between two items in the image may be predicted by generating a predicate embedding from the two encoded extracted items, concatenating the domain embedding with the predicate embedding to generate an enhanced predicate embedding, and predicting the relation from the enhanced predicate embedding. The image encoder and decoder may form, or form part of, a transformer model.

Alternatively, the relation between two items in the image may be predicted by using a self-attention mechanism to condition learnable queries on the domain embedding, inputting the conditioned learnable queries and encoded extracted items into a cross-attention mechanism to generate an enhanced predicate embedding and predicting the relation from the enhanced predicate embedding.

The predicted domain of the image may be generated from global information of the image. The predicted domain may be predicted using a trained neural network.

The global information may comprise a head token (which may be referred to as a class token) of the image generated by the image encoder. The head token may be a randomly initialized token prepended to an input format of the image. The head token may accumulate information from other tokens of the image to form a representation of the global information of the image.

The trained neural network may be a domain predictor unit comprising a multilayer perceptron, MLP, neural network. The MLP may preferably comprise three layers.

The domain predictor unit may be trained using a linear layer with weights of the domain predictor and linear layer being updated using a loss computation between a ground truth domain class and a domain class generated from the domain embedding. The loss computation between the ground truth domain class and the domain class may comprise a one hot coding format.

The domain predictor unit may be trained using a pretrained large language model, LLM. Weights of the domain predictor may be updated by computing a similarly metric between the domain embedding and a ground truth domain embedding generated by the LLM from a user input domain name and minimising a loss function determined from the similarly metric. The minimised loss function may be backpropagated though the domain predictor to update the weights. The similarity metric may be a similarity score.

The predicted domain of the image may alternatively be input by a user into a trained large language model, LLM, neural network as a domain name and the LLM may generate the domain embedding. The user may input a predicted domain or may be presented with a list of predicted domains and be prompted to select an appropriate domain from the list.

The predicted domain may import further information not directly from the image to capture a context of the image based on an overall impression of the image. The overall impression of the image may comprise the global information of the image. The domain predictor may be trained on images grouped with similar overall impressions to generate the domain embedding from the collective training of each image.

The method may include further steps of detecting interactions between two items in the image, the further steps comprising inputting a further image, wherein two items in the further image are the same as the two items in the image, and comparing the predicted relations between the two items in each of the image and the further image to detect an interaction between the two images; and optionally outputting an alert if the predicted relations are different. The method may take contiguous or non-contiguous still images from a video and determine changes in a relation linking two items in each still image.

According to another aspect of the invention there is provided a computer program which, when run on a computer, causes the computer to carry out a method for generating structured text describing an image comprising extracting items from the image, encoding the extracted items, generating a domain embedding from a predicted domain of the image, predicting a relation between two items in the image by decoding the encoded extracted items and the domain embedding and classifying the two items and the predicted relation to form the structured text as a triplet.

According to yet another aspect of the invention there is provided an information processing apparatus for training a neural network to generating structured text describing an image comprising a memory and a processor connected to the memory, wherein the processor is configured to extract items from the image, encode the extracted items, generate a domain embedding from a predicted domain of the image, predict a relation between two items in the image by decoding the encoded extracted items and the domain embedding, and classify the two items and the predicted relation to form the structured text as a triplet.

Embodiments of another aspect include a computer program which, when executed by a companion device, causes the companion device to execute a method of an embodiment. The computer program may be stored on a computer-readable medium. The computer-readable medium may be non-transitory.

The invention may be implemented in digital electronic circuitry, or in computer hardware, firmware, software, or in combinations thereof. The invention may be implemented as a computer program or a computer program product, i.e. a computer program tangibly embodied in a non-transitory information carrier, e.g. in a machine-readable storage device or in a propagated signal, for execution by, or to control the operation of, one or more hardware modules. A computer program may be in the form of a stand-alone program, a computer program portion, or more than one computer program, and may be written in any form of programming language, including compiled or interpreted languages, and it may be deployed in any form, including as a stand-alone program or as a module, component, subroutine, or other unit suitable for use in a data processing environment.

The invention is described in terms of particular embodiments. Other embodiments are within the scope of the following claims. For example, the steps of the invention may be performed in a different order and still achieve desirable results.

The skilled person will appreciate that except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

**Brief Description of the Drawings**

Reference is made, by way of example only, to the accompanying drawings in which:

> **Figure 1** shows an example of a generated scene graph using a method known in the art.
>
> **Figure 2** shows a block diagram of an example method for generating scene graphs known in the art.

**Figure 3** shows another method known in the art for generating a scene graph from an input image.

**Figure 4** shows a block diagram for a method of scene graph generation disclosed herein.

**Figure 5** shows a flow chart for steps of a method for generating a scene graph.

**Figure 6** shows example distributions of words in domains.

**Figure 7** gives an example of a domain predictor module which may be used in the scene graph generation method.

**Figure 8** gives another example of a domain predictor module which may be used in the scene graph generation method.

**Figure 9** gives an example of a domain conditioned decoder which may be used in the scene graph generation method.

**Figure 10** gives an example of another domain conditioned decoder which may be used in the scene graph generation method.

**Figure 11** gives an example transformer domain encoding which may occur in a domain conditioned decoder.

**Figure 12** gives an overall training approach for training the method of scene graph generation disclosed herein.

**Figure 13** shows examples of domain splits and groupings.

**Figure 14** gives an example training approach for training a domain predictor;

**Figure 15** gives another example training approach for training a domain predictor module;

**Figure 16** shows an overall process flow for a scene graph generation method;

**Figure 17** shows an overall testing phase for the scene graph generation method disclosed herein;

**Figure 18a and 18b** show examples of semantically meaningful scene graph triplets generated using the method disclosed herein in contrast with existing methods;

**Figure 19** shows another example of scene graph triplet generation using the method disclosed herein;

**Figure 20** is an example graphical user interface, GUI, for performing the method disclosed herein.

**Figure 21** is a block diagram of an information apparatus, or computer device.

**Detailed Description**

In recent years, machine learning has significantly contributed to the progress of computer vision (CV). There is a demand to improve visual scene understanding of computer vision models for recognition and application tasks. A particular computer vision task is scene graph generation in which a neural network may take an input image and generate relationships, or attributes, for objects in the image.

In general, a scene graph is a graph indicating a specific combination of at least one object (or item) and at least one relation and/or action (or "predicate" or "attribute"). For example, a scene graph may indicate objects and their relationships to each other in an image. That is, a scene graph may correspond to the logical/spatial representation of a graphical scene. Objects in a scene, such as dogs, people (that is, common nouns) are formed of object nodes, and predicates, such as relationships between objects, actions or descriptors, for instance: "looking", "sitting", "playing", "black", "tall", form predicate nodes connecting object nodes or are connected to a single object node. In some scene graphs, a node is only assigned to objects and the predicates are labels along the edges connecting objects.

The scene graph may be a directed graph, where nodes represent the objects, and the edges represent the pairwise relationships between objects. An example of two objects and a pairwise relationship is "a man *playing with* a dog". The man and dog are object nodes and the pairwise relationship, or predicate, is "playing with". In another example "a man *looking at* a dog", the predicate is the term "looking at". To indicate this relationship in a scene graph an arrow may be drawn from the man to the dog (or some other methodology used in other notation) to indicate that it is the man doing the 'looking' and not the other way around.

Additionally or alternatively, a scene graph may be decomposed into structured text such as triplets describing object integrations. For example, an image containing two items may be given as an input. One item may form a subject of the image and another item may form an object of the image. A triplet describing the subject-object interaction may be in the form <subject, predicate, object>. That is, the predicate may indicate a pairwise relationship between the objects as above. For example, the triplet may describe a human-object interaction (HOI).

Thus, a scene graph is a structural representation which captures detailed semantics which model objects ("man", "dog", "car"), attributes (or local predicates) of objects ("man is *tall*", "car is *red*"), and relations (which may be referred to as actions or global predicates), between paired objects ("man *sitting in* car"). Thus, the elements of the scene graph are object nodes and predicate nodes (or in some examples, predicate edges).

The objects, or subjects, of a scene graph may be surrounded by bounding boxes which delimit the object nodes. Each object may have zero, one, or more attributes, or local predicates, such as a colour, a state (e.g., sitting, looking), a material (e.g., metallic, plastic) and/or an emotion (e.g., smiling, crying). Additionally or alternatively, the object may have relations (or actions) such as "jumping over", "sitting on", or the relations may be spatial, ("in front of', "behind"), prepositions "with", comparative words ("taller than"), descriptive verbs "strolled", etc. Thus, a scene graph may be considered as a set of visual relationship triplets in the form of: 'object, relation, object' (which may be otherwise written as '<object, predicate, subject>'.

It is desirable to design a scene graph generation method which may enable more meaningful contextual relation predictions between objects, and the inventors have surprisingly found that this may be achieved using domain embedded knowledge, unique to each domain, with little computation and training overhead.

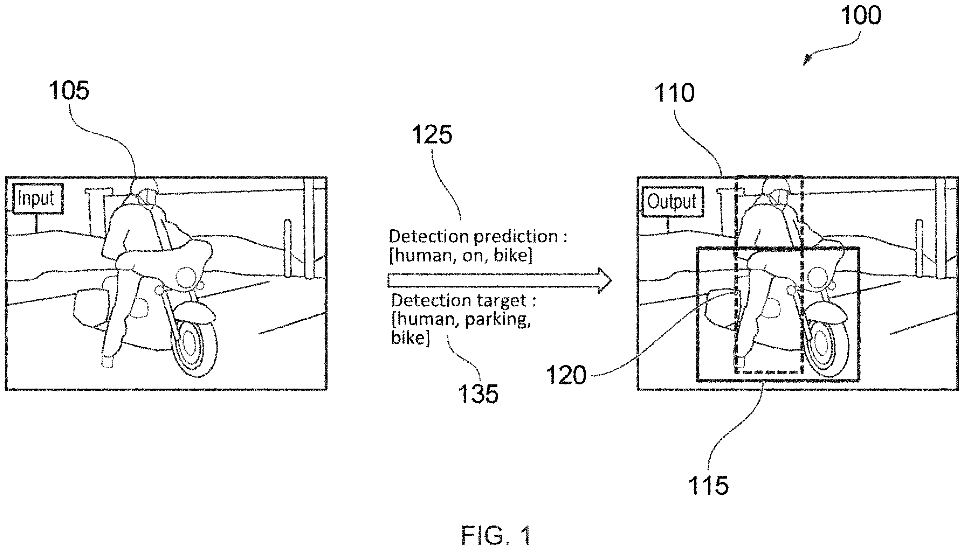

**Figure 1** shows an example 100 of a generated scene graph using a method known in the art. For example, a transformer-based image encoder may be given an input image 105 and encode the image based on the output of an object detector unit. In this example a pretrained decoder is used to predict objects and their relationships.

The inventors found that in known methods the decoders are trained on large datasets containing biased data. For example, the model prediction is biased towards common relations (like, on, in, has) which hold little meaning. Transformer based neural networks have shown promise for visual scene understanding but are computationally demanding and cumbersome to train. For example, the inventors found that the performance of the transformer model is limited and requires computationally intensive retraining to include any new data distribution.

Figure 1 shows an input image 105 of a man and a motorbike in a carpark. The input image may be input into the transformer model and the bike and motorbike may be recognised. The model may use a convolutional neural network to recognise objects in the image. An output image 110 shows bounding boxes 115, 120 around the man and the motorbike. That is, in this simplified overview the decoder unit may recognise the man and the motorbike in the image and generate the bounding boxes. Also shown in the figure is an example output triplet 125 of the transformer-based model. The determined prediction given by the model is <human, on, bike>. While this prediction is correct, it is not meaningful given the context of the image. A desired output 135, or detection target, may instead be <man, parking, bike>.

The inventors found that conditioning a neural network model on domain-specific context-based information may lead to meaningful relation predictions between objects. That is, to generate meaningful relation predictions some additional information may be used to account for different scene types (or meanings).

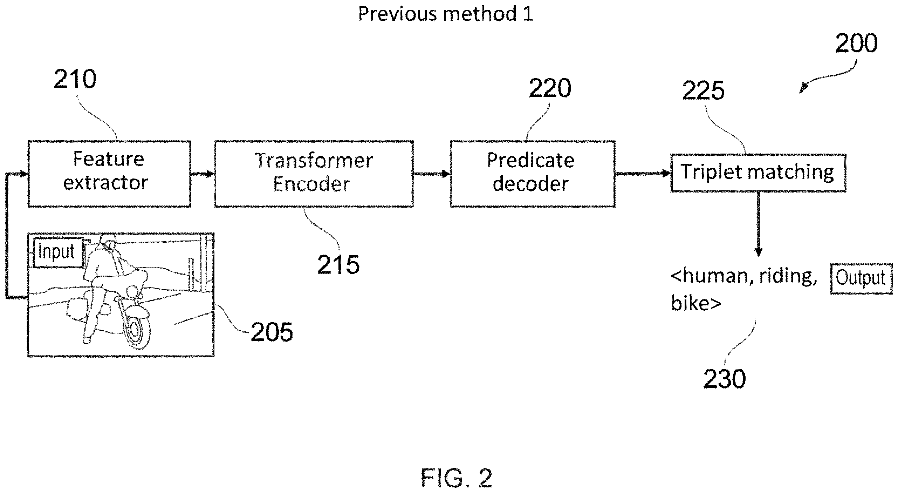

**Figure 2** shows a block diagram of an example method 200, known in the art, for generating scene graphs. The example method is described in, for example, Yang, J., Ang, Y.Z., Guo, Z., Zhou, K., Zhang, W. and Liu, Z., 2022, October. Panoptic scene graph generation. In European Conference on Computer Vision (pp. 178-196). Cham: Springer Nature Switzerland. An image 205 is input into the scene graph generation (SGG) model and features are extracted by a feature extractor. For example, the features of the image, e.g., objects, are extracted from a CNN backbone such as the FASTER-RCNN 'off-the-shelf' detector.

The extracted features are fed into a transformer encoder-decoder model. As shown in Figure 2, the extracted features are fed into a transformer encoder 215 and the output of the encoder is fed into a decoder. The figure shows a predicate decoder 220. Common models also include object decoders (not shown). The extracted features are fed into the transformer model (referred to as a Query learning block) which uses queries to represent triplet information. An output from the decoder is input into a feed forward network which has been trained using triplet matching. This known method uses a transformer-based image encoder and independent object and predicate decoder blocks. However, this method does not use any additional context reasoning-based module. The inventors founds that this method is not able to account for contextual predicates and the model is biased towards common predicates, e.g., Prediction: Man on bike, Ground truth: Man riding on bike. The model picks up on data bias due to large imbalances in label triplets used for training the model and would require some additional information to correctly identify predicates. Furthermore, re-training of the entire network is required for new domain distributions.

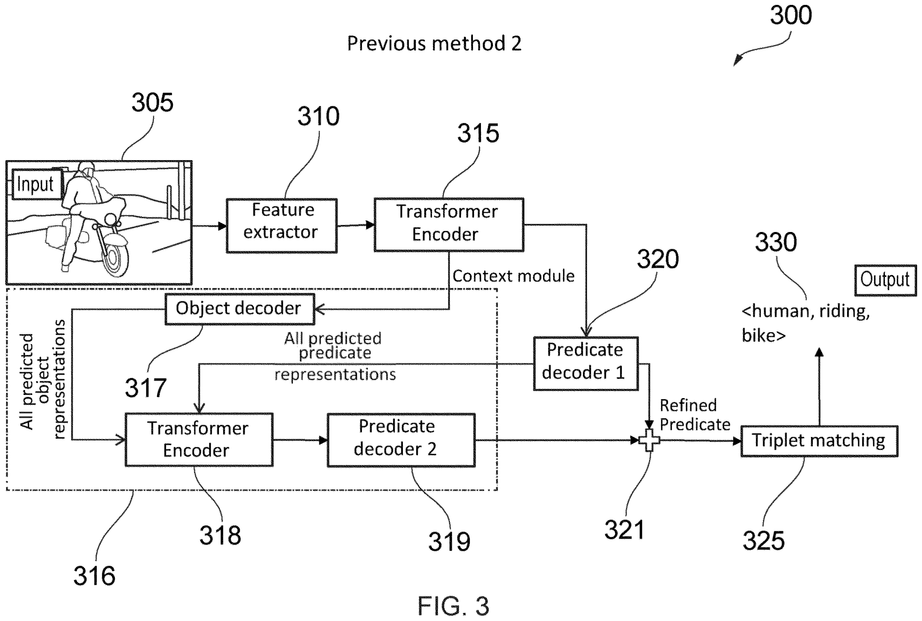

**Figure 3** shows another method 300 known in the art for generating a scene graph from an input image. This method, described in Zheng, C., Gao, L., Lyu, X., Zeng, P., El Saddik, A. and Shen, H.T., 2023. Dual-branch hybrid learning network for unbiased scene graph generation. IEEE Transactions on Circuits and Systems for Video Technology., again uses a standard feature extractor 310 (such as the Faster R-CNN), a transformer encoder 315 and a predicate decoder 1 320.

This known method additionally uses a context module 316. The context module takes the detected object and predicate representations as an input and combines the local and global semantic representations of the predicted objects and predicates to capture the correlation between relation triplets. The context module consists of an object decoder 317, which takes an input from the transformer encoder 315 and outputs all predicted object representations. A context module transformer encoder 318 takes as an input all the predicted object representations along with all the predicted predicate representations from the predicate decoder 1. A predicate decoder 2 319 generates a contextual representation based on an input from the context module transformer encoder. The contextual representation is used to correct "out-of-context" predictions. Triplet matching 325 is used to generate a scene graph triplet with a refined predicate.

The inventors found that while the context module captures existing relation correlations, it does not capture domain discriminative features. That is, the model is limited by the information in the image and does not use additional information (such as text or other labels) for training the context module. The context module extracts context only using information from the single input image, e.g., it will encode all 10 objects in an image along with their predicted predicates together to find global information for a 'context'. The method then concatenates the context prediction with the initial image prediction to determine a confidence level. As only information from the image is used, the model does not learn any new information and effectively uses the same information twice, once in the predicate decoder 1 and then in the context module. Hence, the inventors found this method failed to produce meaningful scene graphs describing the input image.

This known method does not predict a domain of the image, it simply reuses predicted predicates for a context and the context information is extracted from triplet relation correlations, disregarding the samples distribution difference. That is, the context module is trained to account for the long-tail predicate distribution, Hence, there are no predicted domains in this method. Instead, a context is derived from a predicted scene graph of the image, therefore not solving the problem of the SGG method capturing simple predicates. The context module does not capture domain specific predicates. When generating a 'semantic representation' the problem of determining semantically meaningful predicates is not solved as the context module is still considering predicates which are contextually (or domain) irrelevant.

Furthermore, the entire network requires retraining for new domain data, and is therefore computationally heavy.

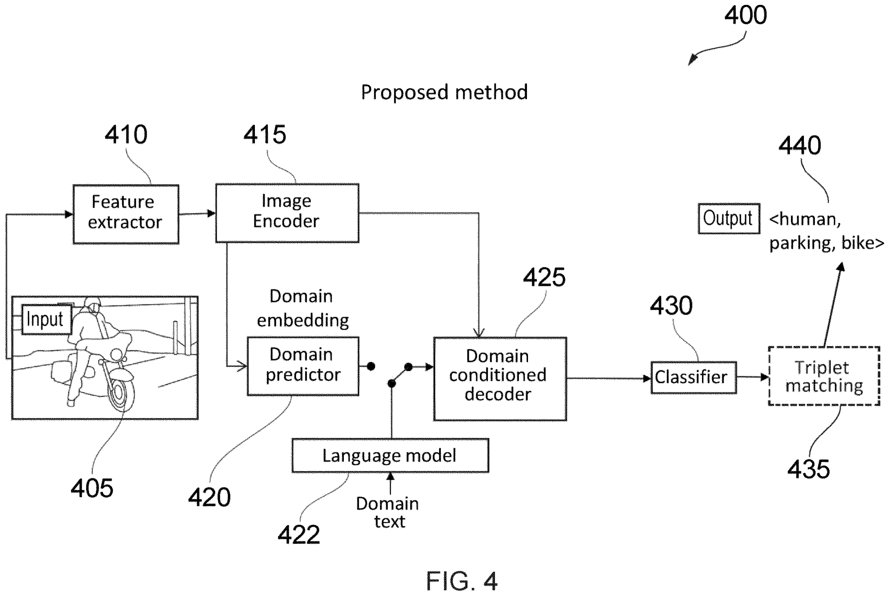

**Figure 4** shows a block diagram for a method of scene graph generation disclosed herein. An input image 405 is input into a scene graph generation model. In this example, the image is of a man and a motorbike in a carpark.

Features of the image, for example items in the image, may be extracted. Features of the image may be extracted using a feature extractor 410. For example, the feature extractor used by the inventors was the ResNet-50 feature extractor module (first introduced in He, K., Zhang, X., Ren, S. and Sun, J., 2016. Deep residual learning for image recognition. In Proceedings of the IEEE conference on computer vision and pattern recognition (pp. 770-778)). The feature extractor may output an embedding, or feature map, of objects detected in the image. For instance, the feature extractor may provide an embedding with dimensions as (number of output channels, output height, output width). Of course, other feature extractors may be used. For example, any suitable convolutional neural network or residual neural network may be used, for instance, the Faster R-CNN known in the art.

The extracted features, which may be the output of the feature extractor, may be input into an image encoder 415. The feature extractor may output each of the features as an embedding with dimension (number of output channels, output height, output width). The embedding may have a total number of (height * width) feature vectors/tokens which are fed to encoder. The output shape of the encoder may also be the same, with number of output channels changed to match the embedding dimension.

The image encoder may take the extracted features, for example feature extractor embeddings, and encode the input to generate another embedding (which make be referred to as an encoder embedding). That is, the image encoder may take as an input extracted items from the feature extractor and encode the extracted items. The image encoder used by the inventors was a pretrained image encoder. Any suitable image encoder adapted for scene graph generation may be used. The inventors used the QPIC transformer model (image encoder and decoder), and the feature extractor discussed therein with pretrained weights (first discussed in Tamura, M., Ohashi, H. and Yoshinaga, T., 2021. Qpic: Query-based pairwise human-object interaction detection with image-wide contextual information. In Proceedings of the IEEE/CVF Conference on Computer Vision and Pattern Recognition (pp. 10410-10419)). The transformer encoder and decoder discussed in the QPIC model were adapted from the known DETR module discussed in (Carion, N., Massa, F., Synnaeve, G., Usunier, N., Kirillov, A. and Zagoruyko, S., 2020, August. End-to-end object detection with transformers. In European conference on computer vision (pp. 213-229). Cham: Springer International Publishing).

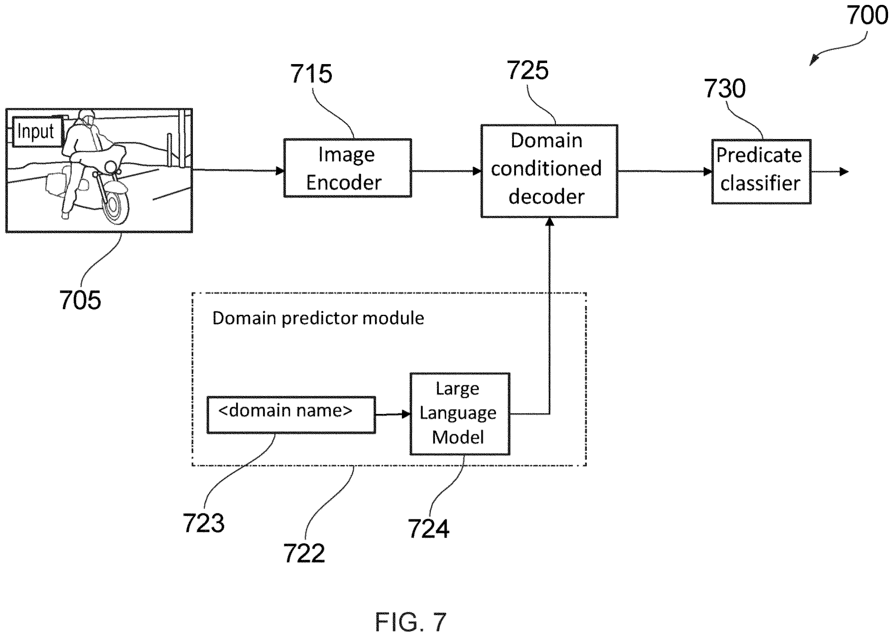

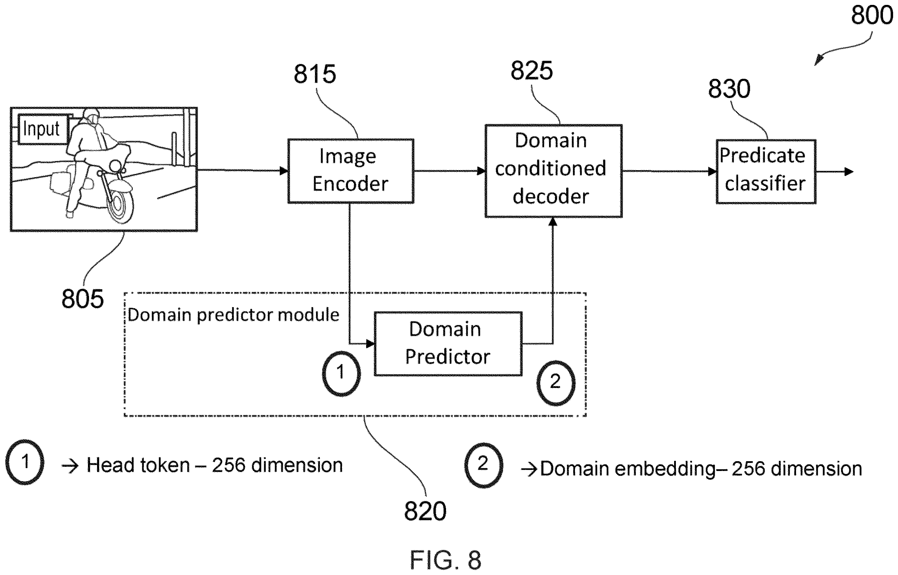

The image encoder may output the encoded items as an encoder embedding. The embedding may be provided as an input into a domain predictor 420 (described in relation to Figures 7 and 8 below). The domain predictor may be a neural network. For instance, the domain predictor may be a multilayer perceptron neural network. The domain predictor may take an input from the image encoder and generate (or compute) a domain embedding. Alternatively, a large language model (LLM) 422 may be used to generate a domain embedding. For example, the LLM may take as an input a domain text (such as shopping) and generate a domain embedding from the text. An example LLM which may be used is the "Bidirectional Encoder Representations from Transformers", or BERT, LLM, known in the art.

If a domain (or scenario) of the image is known before generating a scene graph the embedding may be generated using the large language model. For example, if the scene graph was used for surveillance at an airport, the domain text for the LLM may be entered (or generated) as general text describing an airport.

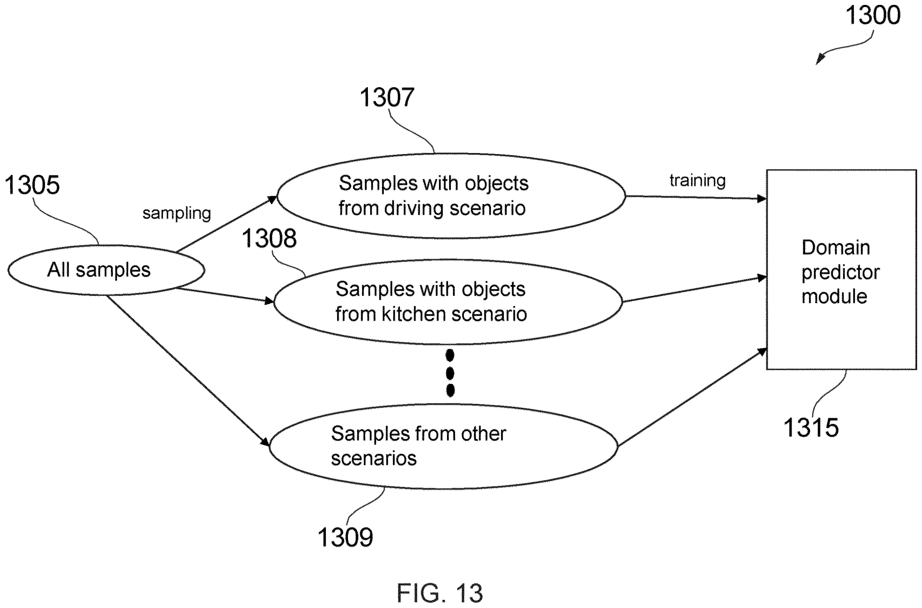

In an example where the domain (or a scenario) of the image is not known before generating the scene graph, an embedding may be generated directly from the image by capturing its context information using the domain predictor. For example, when a user takes a random photograph on a mobile device and enters it into the scene graph generation model, contextual information or a description may not be known. A context of the image may be derived from items in the image. The predicted domain of the image may be generated from global information of the image. For instance, the global information may comprise a head token (which may be referred to as a class token) of the image generated by the image encoder. As described in relation to Figure 13, the context or domain, may contain a predicate distribution unique to that domain. Thus, by capturing the contextual information, a more meaningful predicate may be selected, or derived, from predicates within the predicted domain.

A domain, or domain name, may comprise contextual information of an input image. For example, the domain may comprise the setting for an event, a statement describing an image, a scene, a type of image, the environment captured by an image, the style of an image and so on. The domain may capture where an image was taken, for instance in a shopping mall or an airport or a carpark.

The domain embedding, generated by the domain predictor or LLM, and the encoded image, generated by the image encoder, may be input, or fed, into a domain conditioned decoder 425. For example, the domain conditioned decoder may be based on the QPIC decoder, but with adjusted weights from training (discussed below). That is, the domain conditioned decoder may be a transformer decoder which learns specifically, according to the given task (here triplet prediction), which features to focus on more and provides more suitable features (predicted predicates).

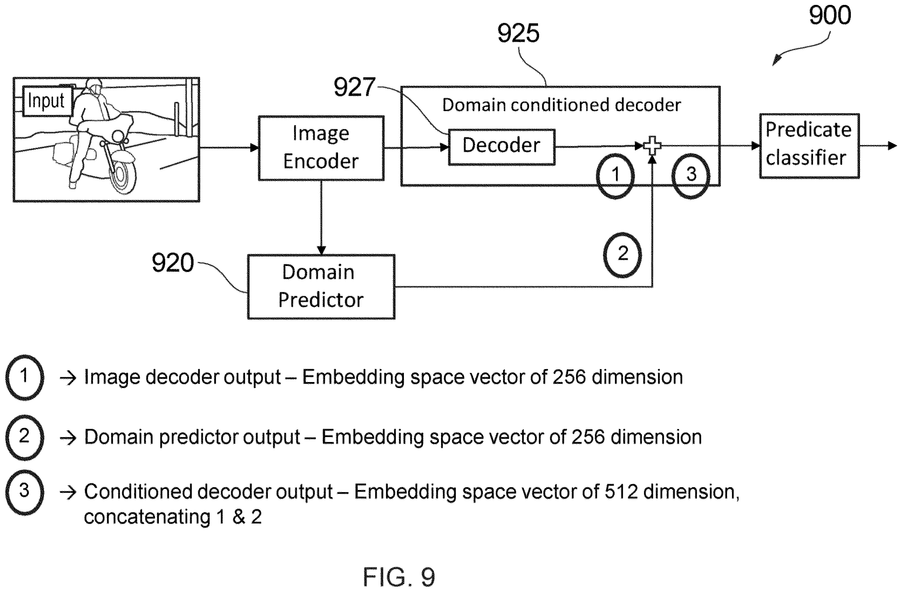

The domain conditioned decoder may predict all objects and predicate embeddings based on the conditioning provided by the domain embedding. The domain conditioned decoder may generate a predicate embedding from the image encoder embedding and combine this with the domain embedding. For example, the predicate embedding and domain embedding may be combined by concatenation. Alternatively, the domain conditioned decoder may use the domain embedding with an attention mechanism to generate an enhanced predicate embedding (see Figures 9, 10 and 11 below).

The enhanced predicate embedding may be input into a classifier 430 to generate structured text in the form of a triplet. The structured text triplet may be a scene graph triplet. The enhanced predicate embedding may be extracted from the decoder output and may be classified using the classifier. The classifier may comprise separate units, or heads, for each of a box coordinate, i.e., a bounding box around an object, and class labels for each object, predicate and subject. The class labels may be combined to form a triplet prediction, resulting in a final prediction.

The classifier may comprise feed-forward networks. For example, the inventors used a 3-layer multilayer perceptron (MLP) NN with ReLU activation function and hidden dimension d, along with a linear projection layer. The FFN may predict the bounding box coordinates by computing a normalized center coordinate, height and width of the box w.r.t. the input image. Furthermore, the linear layer may predict each of the class labels (subject, predicate, object) by using a softmax function. Thus, each output of the classifier may give one combination of subject, object and predicate class, in the form of for example a <subject, predicate, object> triplet, as well as the object coordinates. The inventors used 5 separate classifiers, (so 5 FFNs) for the bounding box and the class labels for the subject and objects, and for the predicates. Each of the "separate classifiers" may be considered as classifiers for a (single) classifier unit encompassing all the classifiers. As above each output of the 5 classifiers may give one or more combinations of triplet pairs (as 1 subject may be paired with 2 different objects).

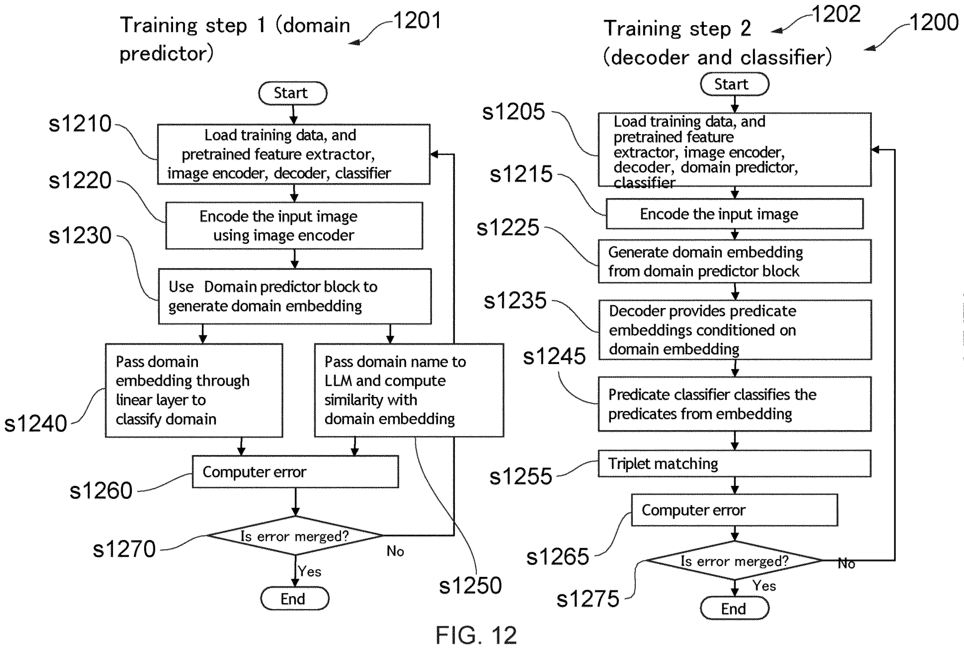

As shown in the Figure, the proposed method may use a triplet matching unit 435. For example, the triplet matching unit may be used in the training phase. The triplet matching unit may not be present in the implementation phase. The training phase is described in more detail in relation to Figure 12. In the training phase, the classifier may generate multiple predictions for triplets using multiple output embeddings from the decoder. In the triplet matching step the predicted triplets generated by the classifier may be matched to a ground truth triplet as, in the ground truth, there may be multiple correct triplets out of which one is selected for each predicted triplet. A known method such as a Hungarian algorithm may be used for the triplet matching with the ground truth and to subsequently train the classifier. The Hungarian algorithm may be used to match the predicted triplets to a ground truth triplet. A loss between the two matched triplets may then be computed and the computed loss may be used to adjust the weight of classifier as well as decoder weights in the training phase.

Thus, in the method disclosed herein, given an image, the SGG method may first predict the domain from image features using a neural network block. Then the method may condition the predicate decoder block on the domain representation to predict meaningful predicates belonging to that domain. The inventors' method is therefore capable of capturing semantically meaningful scene graph relations using unique domain embedding for images belonging to different domains. Further, the model requires little overhead computation for learning domain representation by using a domain predictor module.

As described above, a scene graph may indicate items, and their relationships (or attributes) to each other, in an image. That is, a scene graph may correspond to the logical/spatial representation of a graphical scene. In this example, the scene graph generation method has generated the triplet <human, parking, bike>. The method has generated a semantically meaningful scene graph given the input. The semantically meaningful scene graph may improve downstream tasks such Visual question and answer (VQA), action recognition and image editing.

While the output from the scene graph method is shown as a triplet in this example, the method may additionally or alternatively output a labelled scene graph in the form of bounding boxes around each object in the image with connecting nodes with labels (which may be called labelled links) between the objects. The image may be given in the output with the scene graph superimposed on it, or the scene graph may be generated without the image in the output.

The proposed method for generating a scene graph disclosed here may provide more semantically meaningful predicates. The inventor's method uses additional domain knowledge to condition the predicate prediction. This domain knowledge is trained to be unique for each domain predicate, and hence solves the bias towards general common predicates.

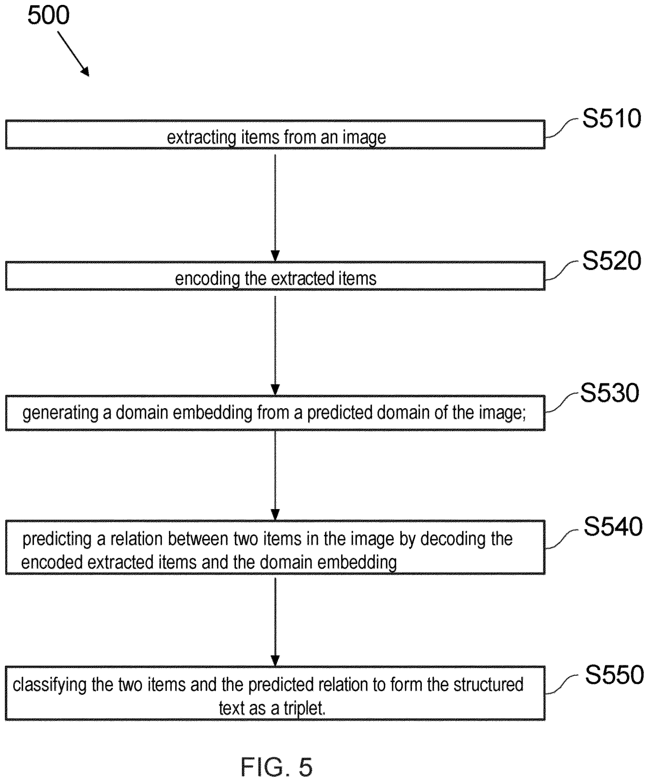

**Figure 5** shows a flow chart for steps of a method 500 for generating a scene graph.

In an extracting step s510 items from an input image may be extracted. For example, an image which captures items may be input into the scene graph generation model disclosed herein and, using a feature extractor, the items may be extracted. The inventors used the ResNet-50 feature extractor. ResNet-50 is a 50-layer convolutional neural network (48 convolutional layers, one MaxPool layer, and one average pool layer). Of course, any suitable feature extractor may be used.

Given an input image, for example, an RGB coloured input image $x \in \mathbb{R}^{3 \times H \times W}$, the feature extractor may extract the items by generating a feature map $z \in \mathbb{R}^{D \times H' \times W'}$, where H' and W' are the output height H and width W of the feature map and D is the number of channels.

In an encoding step s520 the extracted items may be input into an image encoder. The image encoder may form an encoder block of a transformer encoder-decoder module. The image encoder may take the extracted items, in the form of the feature map for example, and encode the extracted items. The items may be encoded by generating an enriched feature map with contextual information. For example, the image encoder may use a self-attention model to enrich the feature map. As mentioned above, in one example the inventors used pretrained weights from the QPIC image encoder. The image encoder may output the encoded items as an embedding (which may be referred to as an encoder embedding).

In a generating step s530 a domain embedding may be generated from a predicted domain of the image. The encoder embedding may be provided as an input into a domain predictor (described in relation to Figures 7 and 8 below). The domain predictor may be a neural network such as a multilayer perceptron neural network. The predicted domain of the image may be generated from global information of the image. For instance, the global information may comprise a head token (which may be referred to as a class token) of the image generated by the image encoder.

Alternatively, in the generating step a large language model (LLM) may be used to generate the domain embedding. If a scenario (or domain) of the image is known before generating a scene graph the embedding may be generated using the large language model.

In a feeding step s540 the encoded extracted items and the domain embedding may be input into a decoder configured to predict a relation between two items in the image. The domain conditioned decoder may form the decoder block of a transformer encoder-decoder. As mentioned above, the inventors used weights from the QPIC decoder and then further trained the decoder to take the domain embedding as an input. The decoder may be configured to predict a relation between two items in the image by generating a predicate embedding from the encoded image, concatenating the domain embedding with the predicate embedding to generate an enhanced predicate embedding and predicting the attribute from the enhanced predicate embedding. That is, the QPIC decoder architecture may be used to predict an initial predicate embedding which may be combined with the domain embedding to generate an enhanced predicate embedding.

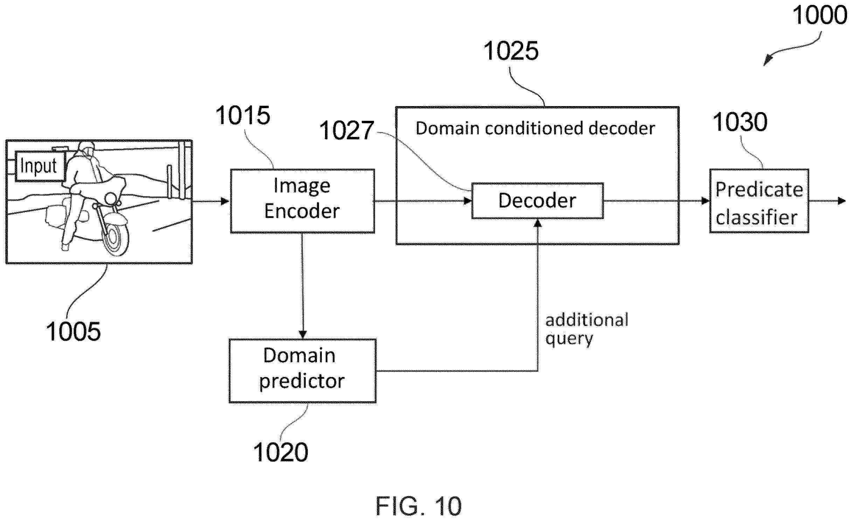

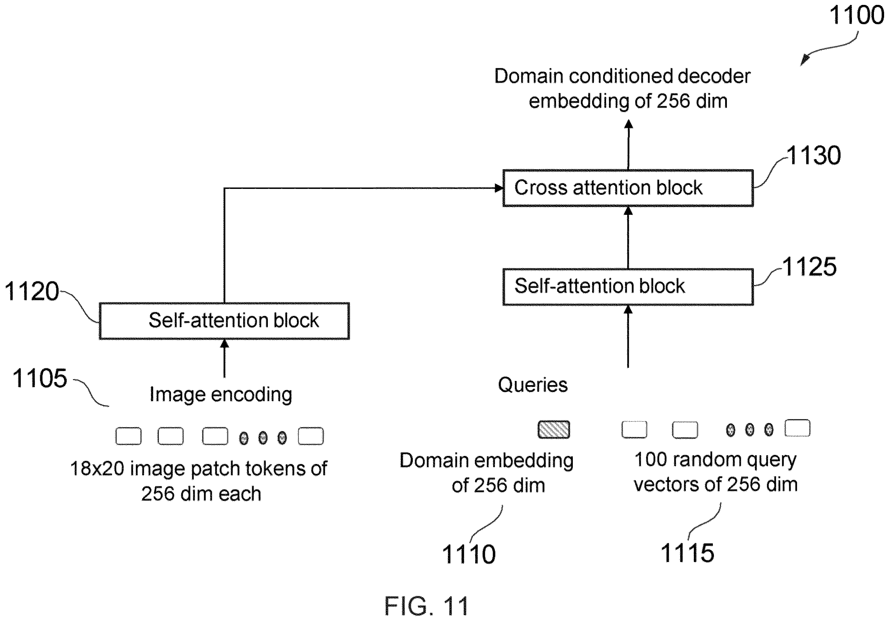

Alternatively, the decoder may be configured to predict a relation between two items in the image by using a self-attention mechanism to condition learnable queries on the domain embedding, inputting the conditioned learnable queries and encoded items into a cross-attention mechanism to generate an enhanced predicate embedding, and predicting the attribute (relation) from the enhanced predicate embedding. That is, the domain conditioned decoder may transform a set of learnable query vectors into a set of embeddings which are conditioned on the domain embedding (see Figures 10 and 11). In this example an enhanced predicate (or domain) embedding may be generated directly without first generating an initial predicate embedding.

In a classifying step s550 the two items and the predicted attribute may be classified to form structured text as a triplet. For example, the enhanced predicate embedding may be input into a classifier to generate a scene graph triplet. That is, the enhanced predicate embeddings may be extracted from the decoder output and may be classified using the classifier. The classifier may comprise separate units, or heads, for each of a box coordinate, i.e., both subject and object have class labels and bounding box predictions. The class labels may be combined to form a triplet prediction, resulting in a final prediction. The classifier may additionally generate bounding box coordinates for the two items and/or each item in the image.

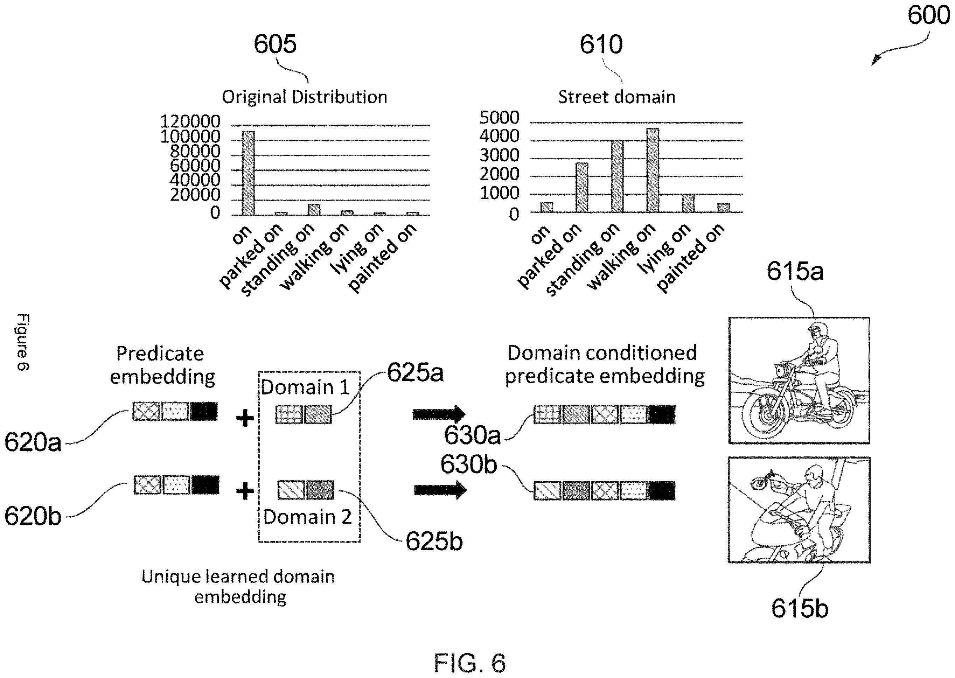

**Figure 6** shows example distributions 600 of words in domains. For example, an original distribution graph 605 shows the long tail problem experienced in the art. A training set containing images with all different contexts may be used to train a scene graph model. For example, the HICO-DET dataset known in the art may be used. However, datasets with labelled triplets (used in training) are biased towards simple relationships such as "on" as shown in the Figure. Hence, when using scene graph models trained on the biased data, the predicted triplets are also biased leading to predicates which confer little context. Furthermore, to include further information in the dataset, such as further images, the whole model must be retrained. This is a computationally intensive process and results is large overhead computation. The methods known in the art (as described above in connection with Figures 2 and 3, use distributions such as the original distribution, therefore resulting in predicates which do not confer the context of the image or scene in the image).

The contextual domain 610 (labelled as a street domain in the figure) shows an example of a domain distribution determined by the inventors. The inventors found a need to identify the underlying distribution representation without affecting the overall performance of the model. The domain distribution shown in the figure is for a "street domain". The graph shows a distribution of words in the street domain such as "parked on", "standing on", "walking on". Words may be manually classified into domains. For example, each domain may correspond to certain words more than others. The words may be identified by the domain modules after training. Hence, a neural network, such as an LLM, may be trained to identify words and classifying them into domains.

Figure 6 also shows examples of unique domain embeddings generated by, for example, the domain predictor. As shown in the Figure, an image of a man riding a motorbike 615a may be given as an input into the scene graph generation model. Alternatively, an image of a man shopping for a motorbike 615b may be given as input. A predicate embedding 620a, 620b for each of the images may be generated by a predicate decoder (for example a predicate decoder which is part of the domain conditioned decoder). The predicate embedding for each image may be the same. That is, the predicate decoder may recognise a man on a motorbike in both images and therefore generate an embedding using this information.

The embedding may represent words or concepts related to the image. As both example images contain men on bikes, the generated embeddings may be the same for both images. Of course, if other example images are input, not related to motorbikes, the generated predicate embeddings may be different.

A unique learned domain embedding 625a, 625b may be generated for each of the images. For example, for the image of a man riding the motorbike the domain may be related to a road. The domain conditioned predictor may generate, or predict the unique domain embedding for different domains based on each input image. The domain embedding for the image of the man shopping for a motorbike may be related to "shopping". Hence, the domain embedding may be generated from the domain text "shopping".

The predicate embedding and the unique learned domain embedding may be conditioned to generate a domain conditioned predicate embedding 630a, 630b. That is, the predicate information may be updated using the predicted domain embedding (and requiring little computation overhead). For example, the predicate embedding, and the unique domain embedding may be concatenated to generate the domain conditioned predicate embedding (which may be referred to as an enhanced predicate embedding). The domain learning is shown here as added predicates to give an enhanced range of predicates from which one may be chosen according to probability.

**Figure 7** gives an example 700 of a domain predictor module 722 which may be used in the scene graph generation method. The domain predictor module may be referred to as a "domain predictor module 1" or "domain predictor block 1".

In this example a user may input a general text representing a use case scenario of an input image 705. An image encoder 715, a domain conditioned decoder 725 and a predicate classifier 730 may be the same or substantially the same as the image encoder, domain conditioned decoder and predicate classifier discussed in relation to Figure 4 above. This example scene graph generation method may include further functional blocks such as a feature extractor and triplet matching (not shown).

The general text may be a domain name 723 entered by, for example, a user into a pretrained large language model (LLM). The domain name may represent a context of the image such as "shopping", "driving", "airport", etc. For example, a user may interact with a graphical user interface (GUI) to enter a domain of the image. Alternatively, the user may be presented with a fixed list of domains to select from and/or the LLM may detect a domain from the image and a user may confirm the detected domain is correct.

The Large language model may take the domain name input and generate a domain embedding. The domain embedding may be an embedding of dimension 256. That is, the embedding may be a vector with dimension 256. The output domain embedding may be input into the domain conditioned decoder block 725 for generating a domain conditioned predicate embedding (which may be referred to as an enhanced domain embedding or enhanced predicate embedding).

**Figure 8** gives another example 800 of a domain predictor module 820 which may be used in the scene graph generation method. The domain predictor module may be referred to as a "domain predictor module 2" or "domain predictor block 2".

An image encoder 815, a domain conditioned decoder 825 and a predicate classifier 830 may be the same or substantially the same as the image encoder, domain conditioned decoder and predicate classifier discussed above. As above, this example scene graph generation method may include further functional blocks such as a feature extractor and triplet matching.

In this example, the image encoder may output a transformer encoded embedding. That is, the image encoder may be a transformer encoder which generates an embedding from an input image or input from a feature extractor. The transformer encoded embedding may comprise patch tokens and a head token (which may otherwise be referred to as a class token). The head token, which is generally used for classification purposes, may be extracted by the domain predictor module.

The head token representing global/contextual information may be fed to the domain predictor module, which outputs an embedding consisting of domain knowledge. In general, the head token (or class token) is a randomly initialized token that is prepended to the start of an embedding (or prepended to patch tokens). The head token may be randomly initialized and therefore does not contain useful information at the start. However, the image encoder takes the randomized head token as an input and accumulates information from the other tokens in the embedding. The head token gathers information from all the patches using, for example, multihead self-attention (MSA). The head token may then be used for classification.

In this example, the domain predictor may be a neural network, such as a multilayer perceptron (MLP) neural network. The inventors found that a 3 layered MLP module was effective for generating a domain embedding. Of course, any other suitable neural network may be used. For example, a different feed forward neural network may be used. Further, the MLP may have fewer than or more than three layers.

The domain predictor disclosed herein may take as an input a head token with the dimension 256 and generate a domain embedding with the dimension 256. That is, the input dimension size and the output dimension size may be equal. Furthermore, the hidden layer size of the neural network may be equal to the input and output dimensions (and hence in this example may also be 256). The domain predictor may generate a single domain embedding from the input. For example, there may be a single word/sentence which corresponds to a domain name. In each domain, there may be multiple predicates (which may be different from the domain name). For instance, the domain name may be "driving"/ "busy street driving", and predicates in that domain may be "riding, parking, wearing, etc.".

**Figure 9** gives an example 900 of a domain conditioned decoder 925 (which may be referred to as a domain conditioned decoder 1) which may be used in the scene graph generation method. The domain conditioned decoder may take an input from the image encoder. Further, the domain conditioned decoder may take an input from either the domain predictor module 1 or the domain predictor module 2.

The domain conditioned decoder may comprise a predicate decoder and an object decoder (individual decoder blocks not shown). The predicate decoder and object decoder may be grouped to form the decoder 927 shown in the Figure. The decoder may take an input from the image encoder and output all object embeddings and predicate embeddings from the encoded image.

A domain embedding obtained from the domain predictor may added to the predicate embeddings to condition them on the predicted domain. In this example the predicate embedding may be concatenated with the domain embedding. That is, as shown in Figure 6, a predicate embedding and domain embedding may be concatenated to form a single enhanced predicate embedding. In this example, the image decoder output may be an embedding space vector of 256 dimension and the domain predictor output may be an embedding space vector of 256 dimension. The domain conditioned decoder may therefore output an embedding space vector of 512 dimension by concatenating the image decoder output and domain predictor output. An attribute of two items in the input image may be predicted from the enhanced predicate embedding.

**Figure 10** gives an example 1000 of a domain conditioned decoder 1025 (which may be referred to as a domain conditioned decoder 2) which may be used in the scene graph generation method. The domain conditioned decoder may take an input from the image encoder. Further, the domain conditioned decoder may take an input from either the domain predictor module 1 or the domain predictor module 2. The domain conditioned decoder may form a decoder block of a transformer encoder-decoder. The image encoder may form the encoder block, for example.

In this example, an attention mechanism, such as a combination of self-attention and cross attention, may be used to generate the enhanced predicate embedding (the attention mechanism may form part of a transformer architecture). A domain embedding, generated by the domain predictor 1020 may be input (or fed into) a decoder module 1027 as an additional query (domain query) in addition to randomly initialized queries (entity queries). Embeddings generated by the image encoder may be input as key and value vectors.

The entity queries (vectors) may be conditioned on the domain query (vector). The entity queries attend to the encoded image keys and may be used to compute the attention scores. The attention scores may be calculated using a known method such as determining a softmax function. The entity queries may be updated by adding the encoded image values based on the attention scores. The decoder module may output final entity queries (that is enhanced predicate embeddings) as triplet embeddings or all object embeddings and predicate embeddings. More detail of the attention mechanism is given in relation to Figure 11 below.

**Figure 11** gives an example of a transformer architecture which may be configured in the image encoder and domain conditioned decoder 2. The image encoder may generate an embedding 1105 from an input image. For example, the image encoder may take the input image, or a feature map generated by a feature extractor, and generate 18x20 image patch tokens. Each image patch token may have a dimension 256. Each token may be input into a self-attention mechanism block 1120 (which may be referred to as an image encoder self-attention block) and a self-attention score may be calculated using a known method. For example, in a self-attention mechanism, every input vector is assigned three representations, a key, a query and a value. The weights of the key, query and value representations may be initialised randomly using an appropriate random distribution such as gaussian, Xavier or Kaiming distribution. The initialisation may be done once before training the self-attention mechanism.

The known method for calculating the self-attention score may comprise the following steps. A dot product attention is calculated as the score function. A softmax is taken for each attention score. Weighted values may be calculated by multiplying the softmax attention scores with the values representation. The weighted values may then be summed element wise to produce an output. If there are multiple input vectors then the process is repeated using each input vector to produce outputs.

A self-attention mechanism may also be used for domain embeddings, for instance in the domain conditioned decoder block. The domain predictor may generate a domain embedding of 256 dimension. The inventors input the domain embedding along with 100 random query vectors of 256 dimension each into a self-attention block 1125 (which may be referred to as a domain predictor self-attention block). The domain queries were used to condition the entity queries. That is, the self-attention block may condition the entity queries on the domain queries. The self-attention between the domain embedding and the query vectors ensures domain knowledge is induced in the queries.

The outputs from the image encoder self-attention block and domain predictor self-attention block may be input into a cross-attention block 1130. The cross-attention block may be configured in the domain conditioned decoder. Similar to the self-attention mechanism described above, the cross-attention mechanism uses a Key (K), Query (Q) and Value (V) matrix. However, unlike the self-attention mechanism where K, Q and V are derived from a single sequence, the cross-attention mechanism uses multiple sequences. The output from the image encoder self-attention block may be projected to the to the Key, K, matrix and the value, V, matrix and the output from the domain predictor to the Query, Q, matrix. An attention score may be calculated by applying a softmax function on Q, K and V, with a normalisation constant. The inventors found that the cross-attention between the image encoder embeddings and queries capture contextual image features. In this example, the cross-attention block is shown to output a domain conditioned decoder embedding (enhanced predicate embedding). The enhanced embedding may have the same dimension as the dimension of the Query matrix. In this example the enhanced embedding has the dimension 256.

**Figure 12** gives an overall training approach for training a scene graph generation model disclosed herein. The training approach may comprise two phases 1201, 1202 for training the method.

In a first phase 1201 each of the feature extractor unit, image encoder unit, decoder unit and classifier unit may be loaded S1210, or obtained, along with training data. The image encoder unit and decoder unit may, for example, form a transformer encoder and decoder unit. The feature extractor and image encoder may be pretrained models. For example, the feature extractor and image encoder may use the pretrained weights of the QPIC model by Masato Tamura et al. The feature extractor used by the inventors was the ResNet-50 feature extractor. Of course, other feature extractors may be used. In this first phase the decoder may also be loaded with a pretrained weight from the QPIC model. The inventors later modified the decoder weights in the training phase (see below). The training data may be from the HICO-DET dataset. Of course, any other suitable training data may be used, for example the COCO dataset may be used. For example, any image with labelled ground truth triplets may be used in the training set.

In an encoding step s1220 the output from the feature extractor may be encoded using the image encoder. The image encoder may generate an embedding for the input image. For example, the image encoder may produce a feature map of the image using a self-attention mechanism. The feature extractor may output a feature map and the image encoder may take this feature map as an input and produce another feature map with richer contextual information (i.e., by using self-attention).

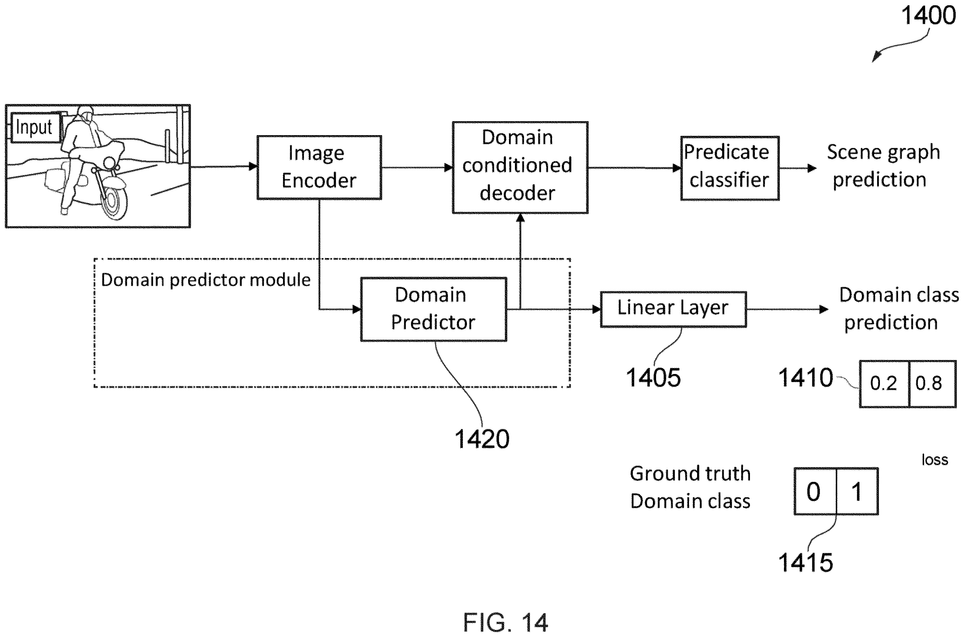

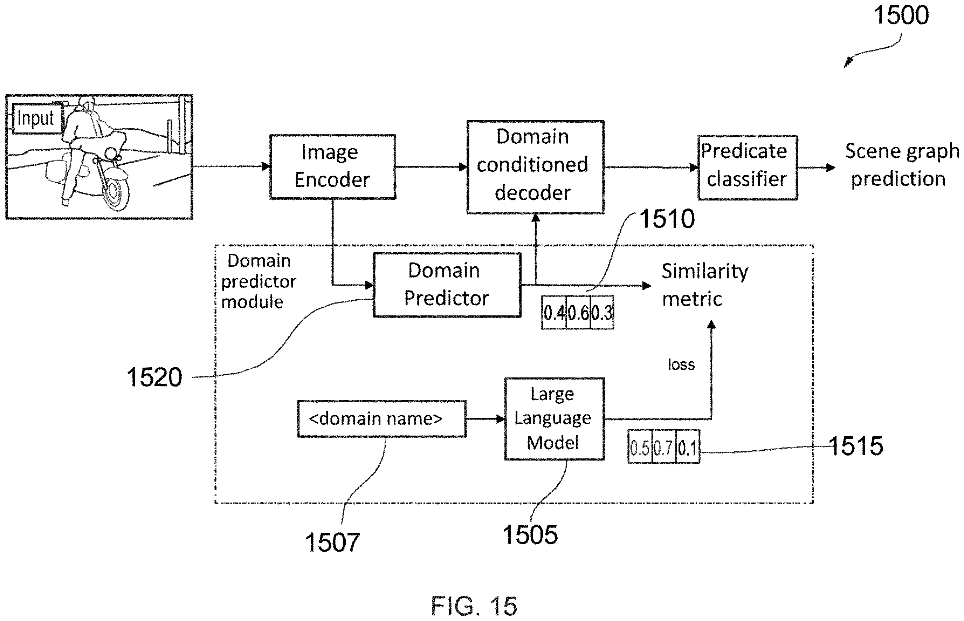

In a predicting step S1230 the domain predictor block may be used to generate a predicted domain embedding from input by the image encoder. The predicted domain embedding may be used to train the domain predictor module. For example, the domain predictor module may comprise a multilayer perceptron (MLP). The inventors used a 3-layer MLP but of course other appropriate neural networks, such as other feed-forward neural networks may be used. The domain predictor module may be trained using ground truth domain labels of input images. The domain predictor module may be the domain predictor module 2 described in relation to Figure 8. Methods for training the domain predictor are described in relation to Figures 14 and 15 below. For instance, the predicted domain embedding may be passed s1240 through a linear layer to classify the domain (see Figure 14). Alternatively, a domain name may be passed to a large language model (LLM) and a similarity score may be computed with the predicted domain embedding.

Alternatively, the domain predictor module may comprise a large language model, LLM, such as the domain predictor module 1 described in connection with Figure 7. The LLM may be a pretrained LLM which takes as an input a domain name and generates a domain embedding.

In a computation step s1260 an error between the predicted domain embedding and ground truth may be calculated. For example, and as described in connection with Figures 14 and 15, a loss function may be calculated between the predicted domain embedding and ground truth.

In an optimization step s1270 the weights of the domain predictor module may be updated. The training method may use the AdamW optimizer (Ilya Loshchilov and Frank Hutter. Decoupled weight decay regularization. In ICLR, May 2019) to train the weights. The training method may involve a gradient descent method to minimize the loss function. The inventors trained the model for 50 epochs using the AdamW optimizer with the batch size 16, initial learning rate of the backbone network $10^{-5}$, that of the others $10^{-4}$, and the weight decay $10^{-4}$ Hence, the weight for the domain predictor module may be set when the error in the loss function merges for a fixed number of epochs.

In a second phase 1202 the predicate embedding from the decoder may be used by the predicate classifier to classify predicate outputs. The predicate classifier weights may be trained using the few image and scene graph training samples obtained from the domain. For example, as in the first phase, the training data, and pretrained feature extractor, image encoder, decoder and classifier may be loaded s1205 along with domain predictor module. Further, as in the first phase, an input image may be encoded s1215 using the image encoder and a domain embedding may be generated s1225 using the domain predictor module.

In a generating step s1235 the domain conditioned decoder may generate enhanced predicate embeddings conditioned on the domain embedding. For example, the domain conditioned decoder may generate an enhanced predicate embedding (which may be referred to as an enhanced domain embedding) by combining a predicate embedding generated from the image encoder and the domain embedding generated from the domain predictor. The generated enhanced predicate embeddings may be input into a predicate classifier (and may also be input into an object classifier and subject classifier, not shown. The object and subject classifiers may take input directly from the domain conditioned embedding).

In a classifying step s1245 a predicate classifier may classify the predicates from the enhanced predicate embeddings. For example, the classifier may take the decoder output embeddings and classify them into the object bounding box coordinates, the object class and the predicate class. The classifies may comprise a feed forward neural network. Thus, each output of the classifier may give one combination of subject, object and predicate class, in the form of for example a <subject, predicate, object> triplet, as well as the object coordinates.

In a triplet matching step s1255 the predicted triplets generated by the classifier may be matched to a ground truth triplet as, in the ground truth, there may be multiple correct triplets out of which one is selected for each predicted triplet. A known methods such as a Hungarian algorithm may be used for the triplet matching with the ground truth.

In a computation step s1265 an error between the predicted triplets and the ground truth triplets may be calculated. For example, using the Hungarian algorithm a matching cost may be determined, and a loss function may be calculated for each pair of predicted triplet and ground truth triplet.

In an optimization step s1275 the weights of the domain conditioned decoder and the classifier may be updated. The training method may use backpropagation and the AdamW optimizer (as above) to train the weights. The training method may involve a gradient descent method to minimize a loss function. For example, after the Hungarian matching, several losses between the prediction and matched ground truth may be predicted. The losses may be cross entropy or focal loss between predicted verbs. The inventors trained the model for 50 epochs using the AdamW optimizer with the batch size 16, initial learning rate of the backbone network $10^{-5}$, that of the others $10^{-4}$, and the weight decay $10^{-4}$ Hence, the weights for the domain conditioned decoder predictor module and classifier may be set when the error in the loss function merges for a fixed number of epochs. The classifier may be trained separately for each domain (see Figure 13). That is, for each domain, e.g., kitchen, driving, shopping, etc, the classifier weights may be trained on only images and scene graph training samples obtained from that domain.

**Figure 13** shows examples 1300 of domain splits and groupings. Domain splits may be manually decided by a user and/or may be decided using a trained neural network. In this example, all sample 1305 may be split into domains, the contents of a domain collectively describing a scenario. The "all samples" are shown to be categorised into the domains "samples with object from driving scenario" 1307, "samples with objects from kitchen scenario" 1308, and "samples from other scenarios" 1309.

Samples with objects from driving scenario may comprise predicates relating to driving scenarios such as "man riding motorcycle", "man walking dog", "man washing cycle", etc. Hence, predicates in the domain relating to driving may be "walk", "race", "park", "wash", "repair", "operate", "turn", "push", "hop on". Objects in the driving domain may be "motorcycle", "bicycle", "horse", "train", "traffic signal", etc. Of course other objects and predicates may be categorised into the driving domain.

Similarly, samples with objects from the kitchen scenario may comprise predicates relating to the kitchen scenes such as "man holding knife", "man feeding dog", "man cleaning bowl", etc. Hence, predicates in the kitchen domain may be "eat", "drink", "clean", "lick", "squeeze", "repair", "fill", "cut", "open", "peel", "cook", and objects may be "bowl", "knife", "pizza", "refrigerator", etc. Of course, other objects and predicates may be categorised into the kitchen domain.

Of course, other domains may exist, and objects and predicates may be categorised into these other domains. Specific predicates and objects may be present in multiple domains. For example, general objects such as "man" and "bike" may be present in multiple domains. Similarly, predicates such as "push" may occupy multiple domains.

Each domain may be separately used to train a domain predictor module 1315. That is, a neural network, or transformer model, may be separately trained on each domain. The domain predictor module may take an input from the image encoder, mentioned above, and generate a domain embedding for the given input. In methods known in the art, the decoder, used to generate an embedding, is trained on all samples, leading to problems such as the long-tail problem discussed above. In contrast, in the method disclosed herein, the domain predictor may be trained on each domain separately. The generated domain embedding may therefore be generated using only objects and predicates from the predicted domain. That is, the domain predictor module may predict a domain of an image and generate a domain embedding which is specific to the predicted domain. Predicates predicted from the input image may therefore be narrowed to a pool of predicates in a specific domain, thereby leading to a more semantically meaningful prediction. Further, new domain distributions may be learned with few new samples from a distribution, therefore reducing the required computation when training the model.

**Figure 14** gives an example 1400 training approach for training a domain predictor 1420. The domain predictor may be, for example, the domain predictor 2 described in relation to Figure 8. The image encoder, feature extractor (not shown), domain conditioned decoder and predicate classifier may be the same or substantially the same as described above. The domain conditioned decoder may be, for example, the domain conditioned decoder 1 or the domain conditioned decoder 2.

As described above, the domain predictor module may take as an input global information, such as a head token, from the image encoder and transform it into a domain embedding. The domain embedding may be fed to a linear layer neural network which outputs a domain class prediction 1410. Weights of the domain predictor and Linear Layer block may be updated using a loss computation between ground truth domain class 1415 and predicted domain class. The predicted domain class and the ground truth domain class may be compared using a one hot coding format and the loss computed. The ground truth domain class may be generated/decided by grouping samples having similarity into classes. For example, a group of objects such as bike, cycle, helmet, etc may form one domain, which is labelled as 1 (representing street domain). Other groups of objects like pizza, spoon, refrigerator, etc may be grouped as another domain with label 2 (representing kitchen domain)

In this example, the domain predictor may be a neural network, such as a multilayer perceptron (MLP) neural network. The inventors found that a 3 layered MLP module was effective for generating a domain embedding. The domain predictor and linear layer may be trained using backpropagation with an Adam optimizer.

A simple linear layer, which may also be referred to as a "fully connected layer" or "dense layer" may perform a linear transformation on the domain embedding. For example, a linear layer may take an input vector and map it to an output vector through a linear function. In a neural network, a linear layer may take an input tensor, such as the domain embedding, and transform it into an output tensor by performing a linear operation which involves weights and biases.

When training a neural network with linear layers, a goal may be to find the weights and biases which minimize a loss function. The loss function measures the difference between the predicted output of the network and the true output (or ground truth). In this example, the inventors used a normal multi-class cross-entropy loss function to train the linear layer. Of course, other loss functions may be used. The inventors trained the linear layer and domain predictor together by minimising the loss function between a domain class prediction of the linear layer and a ground truth domain class. During the implementation stage the linear layer may be removed (or rather not used) so that the output for the domain embedding is input directly into the domain conditioned decoder.

**Figure 15** gives another example 1500 training approach for training a domain predictor module 1520. The domain predictor module may be, for example, the domain predictor 2 described in relation to Figure 8. As described above, the domain predictor module may take as an input global information, such as a head token, from the image encoder and transform it into a domain embedding.

A pretrained large language model 1505 may take as an input a domain name 1507 and output a domain embedding. That is, a user may input a domain name relating to an input image and the LLM may generate a domain embedding from the input. In this method, a loss may be computed directly by comparing the 'ground truth' domain embedding of the class generated by the LLM with the predicted domain embedding. That is, a similarly metric may be used to compare the ground truth domain embedding and predicted domain embedding. To train the domain predictor, a loss function may be used, for example distance loss function may be used. A distance loss function such as a Euclidean distance loss function may be computed to bring the domain embedding predicted by the domain predictor closer to the LLM embedding. In an example, the domain predictor may be a neural network, such as an MLP, and backpropagation may be used to adjust weights of the neural network according to a minimised loss function.

In this example, the domain embeddings are shown to consist of three tokens (the domain prediction embedding is shown with the values 0.4, 0.8 and 0.3, and the LLM embedding is shown with the values 0.5, .0.7, 0.1. These values may be normalised values. That is, each token in the embedding may vary between 0 and 1. Three tokens are shown here, however, of course the embedding may consist of more or fewer tokens.

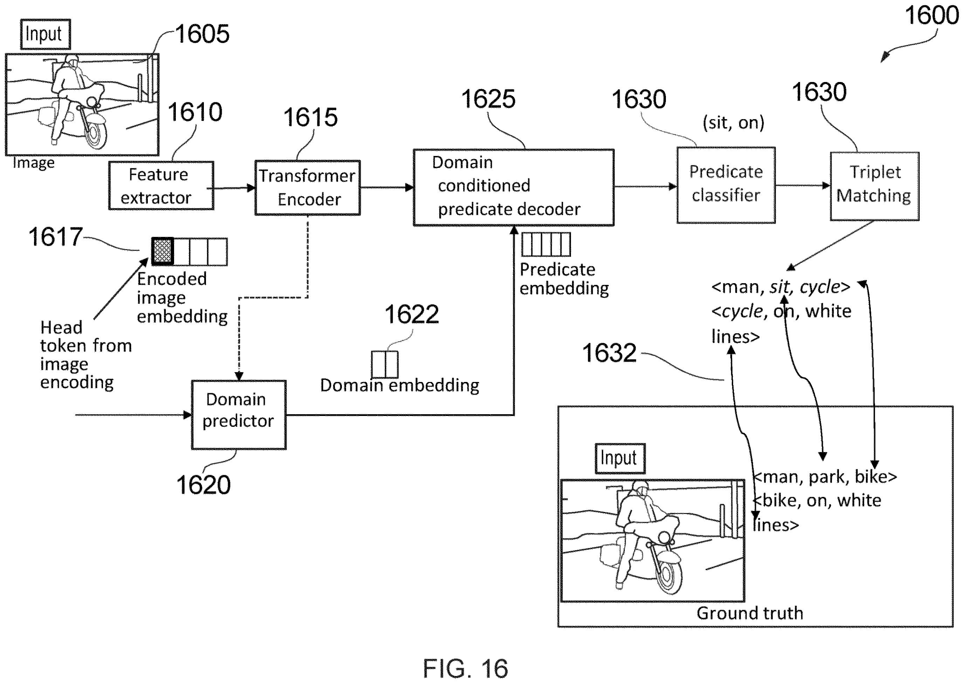

**Figure 16** gives an overall process flow for a scene graph generation method 1600. An input image 1605 may be input into the scene graph generator and features may be extracted using a feature extractor. For example, the feature extractor may be a pretrained feature extractor such as the ResNet-50 module. Of course, other feature extractors, such as the Faster R-CNN, may be used. The feature extractor may extract image features. That is, the feature extractor may generate normal CNN based general features from the image. The feature extractor may generate an embedding. The embedding may be of the dimension "(number of output channels, output height, output width) and may be output as a feature map.

The extracted features may be input into an image encoder, which is for example a transformer encoder 1615. The image encoder may be, for example a pretrained model such as the QPIC model, a paper by Masato Tamura, et al. The QPIC model is a module adapted from the DETR module and which is trained for further scene graph generation tasks. The image encoder unit may take the embeddings from the feature extractor and encode the input image into a feature vector (or feature embedding). The image encoder may be part of a transformer encoder and may use a self-attention mechanism to encode the input embeddings. The image encoder may generate a head token 1617 (or class token) for the input image which represents global image features.

The output embeddings from the image encoder may be input into a domain predictor module (or unit). The domain predictor module may comprise a multilayer perceptron layer (MLP). For example, the MLP may comprise 3 layers. The domain predictor may output a domain embedding 1622 using the global image features. That is, the domain predictor module may output a domain embedding. The domain predictor module may be the domain predictor module 1 described above.

Alternatively, the domain predictor module may be the domain prediction module 2, that is an LLM model, and may instead generate a domain embedding from a user input.

The domain embedding from the domain predictor and the feature embeddings from the image encoder may be input into a domain conditioned predicate decoder 1625. The domain conditioned predicate decoder may be the domain conditioned decoder 1 or the domain conditioned decoder 2 described above. For example, the domain conditioned predicate decoder may take the domain embedding as an input along with, for example 100 random query vectors and use a self-attention mechanism to condition the random queries on the domain embedding. The domain conditioned decoder may take the feature embeddings from the image encoder (which may have been transformed using a self-attention mechanism as above) along with the conditioned random queries to generate enhanced domain (or predicate) embeddings. If, for example, 100 random queries are used, the domain conditioned predicate decoder may generate 100 enhanced predicate embeddings.

The image encoder and domain condition predicate decoder may form a transformer encoder-decoder architecture. A self-attention mechanism on the encoder side may be used to mutually learn which information is important for each token (with the input image divided into multiple tokens). On the decoder side, usually many random queries (in this example 100 random query vectors), may be taken with a cross-attention mechanism along with the image encodings, with each query representing a triplet prediction. The queries are conditioned on the domain embedding using self-attention to incorporate the domain knowledge of the domain embedding into the queries. The queries may be designed such that one query captures at most one object-subject pair and an interaction between them. Thus, the number of queries may be set to be large to be larger than the number of actual subject-object pairs (or interactions) in the input image.

The enhanced predicate embeddings may be input into a predicate classifier 1630. The predicate classifier may take the input embeddings and output a predicate class based on the input. For example, in the figure the predicate classifier is shown to output the predicates "sit" and "on". The scene graph generation method may also include object and subject classifiers (not shown in the figure). Known methods may be used to generate object and subject classes. For example, the object and subject classifiers may take inputs from known scene graph generation transformer encoder-decoders (such as from QPIC model) and generate the object and subject classes. Hence, in this example with 100 queries, the 100 embeddings generated by the domain conditioned decoder may be input into the predicate classifier and classified into individual predicates (or attributes). For each sample image, with 100 queries, each query may have one pair of (subject, object, predicate) associated with it. Hence, there may be a total 100 pairs of (subject, object, predicate). The same subject-object pair having different predicates may be output, for example, <man, on, bike> as well as <man, riding, bike> may be output.

The object classifier, subject classifier and predicate classifier may be collectively be referred to as a classifier unit or classifier module such that the classifier unit takes the decoder output embeddings and classifies them into the object bounding box coordinates, the object class, and the predicate class.

The outputs from the classifier may be input into a triplet matching module 1630. Each output of the classifier may give one combination of subject, object and predicate class as well as object coordinates (i.e., a triplet of two objects and a matched predicate). The triplet matching module may match 1632 the predicted triplet to a ground truth triplet as, in ground truth, there may be multiple correct triplets out of which one is selected for each predicted triplet. A known method such as a Hungarian algorithm may be used for the triplet matching with the ground truth. For example, the Hungarian algorithm disclosed in H. W. Kuhn and Bryn Yaw. The Hungarian method for the assignment problem. Naval Res. Logist. Quart, pages 83-97, 1955, may be used.

The Hungarian algorithm may comprise padding the ground truth set of object-subject pairs with a parameter φ (no pairs) so that the ground-truth set size is the same as the number of queries. The algorithm may then be leveraged to determine the optimal pair, or assignment, among all possible permutations of the predicted predicates (queries). A matching cost may be determined which consists of four types of costs: a box-regression cost, intersection-over-union (IoU) cost, object-class cost, and predicate-class cost (or may be referred to as action-class cost). A loss function, *the Hungarian loss,* may then be calculated for all pairs matched in the previous step.

As shown in the figure, the classifier may generate the triplets <man, sit, cycle> and <cycle, on, white lines>. The triplet matching module may use the Hungarian algorithm to match the triplets and determine a loss with the ground truths <man, parking, bike> and <bike, on, white lines>. The ground truth and predicted triplets are matched based on the "most matching pair" using the algorithm and then the loss between the match is computed. In this example, the most patching pair (closest) is shown in the Figure, i.e. output of matcher. The figure shows an example where the prediction may not be exactly the same as the ground truth. A comparatively high loss may be calculated between the incorrect prediction (show in italics in the output) and the ground truth, and backpropagated though the system in training.

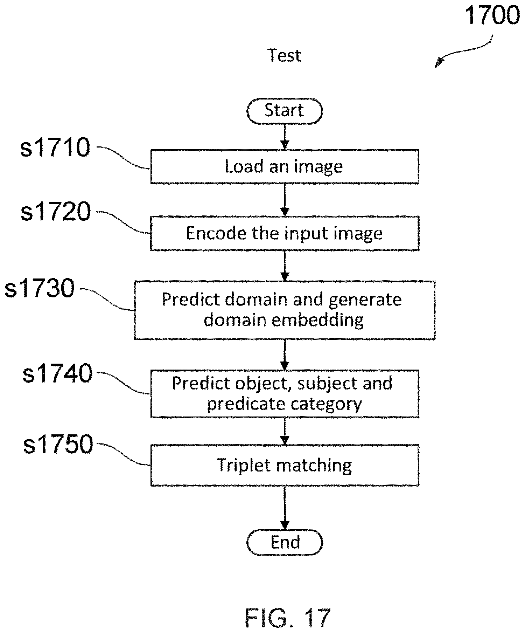

**Figure 17** gives an overall testing phase 1700 for the scene graph generation method disclosed herein.

In a loading step s1710 an input image may be loaded. For example, a photograph taken from a camera or phone camera, or a still from CCTV camera footage or movie may be loaded.

In an encoding step s1720 the input image may be encoded. For example, the input image may be input into a feature extractor, such as the ResNet-50 feature extractor to generate a feature map. That is, the feature extractor may extract image features (or objects) from the input image. Any suitable convolutional neural network or residual neural network may be used. The output from the feature extractor may be input into an image encoder. The input image may therefore be encoded by the image encoder. The image encoder may be the encoder side of a transformer encoder-decoder model. The output of the image encoder may be an embedding (an encoder embedding). The embedding maybe be in the form of an enhanced feature map.

In a generating step s1730 the encoder embedding may be input into a decoder side of the transformer encoder-decoder. In this example the decoder is the domain conditioned decoder described herein. The decoder may generate a predicate embedding from the input image encoder embedding. Furthermore, the image encoder embedding may be input into the domain predictor module. The domain predictor module may generate a domain embedding from the input embedding. The domain embedding may be input into the domain conditioned decoder and the domain embedding may be combined with the predicate embedding to generate and enhanced predicate embedding. Alternatively, the enhanced predicate (or domain) embedding may be generated using attention mechanism as discussed in connection with Figure 11.

In a predicting step s1740 the enhanced predicate embedding may be input into a classifier. The classifier may comprise a predicate classifier, an object classifier, and a subject classifier. The classifier may predict the object, subject and predicate category (or class). For each input embedding, the classifier may generate an <object, predicate, subject> triplet.

In a matching step s1750 the generated <object, predicate, subject> triplets may be compared to ground truth triplets of the input image. An error may be calculated by determining a loss using the Hungarian algorithm.

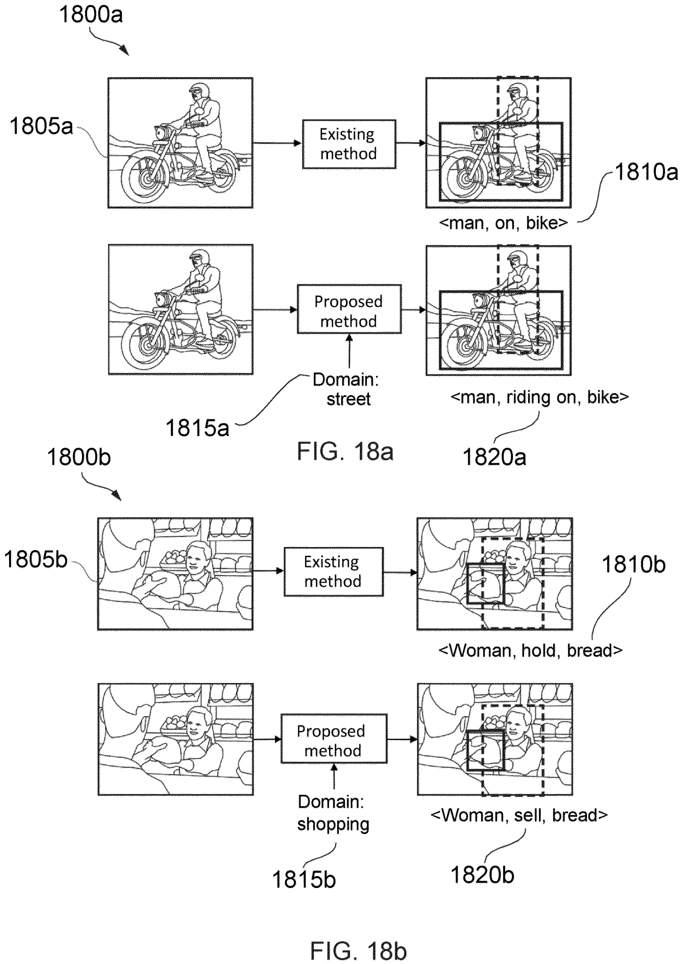

**Figure 18a and 18b** give examples 1800a, 1800b of semantically meaningful scene graph triplets generated using the method disclosed herein, in contrast to the output of an existing method.

A first input image 1805a shows a man, a motorbike, and a road. The inventors found that using methods known in the art, the triplet generated may be <man, on, bike>. While this triplet does correctly describe the scene, it lacks contextual information and is vague. The inventors found that the known methods commonly assign simple predicates, e.g., on, in, next to, due to the long tail distribution problem.

In contrast, in Figure 18a the method disclosed herein may generate the triplet 1820a <man, riding on, bike>. The predicate "riding on" is more contextually relevant and captures the relationship between the man and the bike in a more meaningful way. As shown, the domain 1815a "street" may be input into the model. For example, the domain predictor module may predict the domain and generate a domain embedding for the street domain. Alternatively, the domain name "street" may be user input into a large language model to generate the domain embedding.

A second input image 1805b shows a woman and a man in a bakery. The inventors found that using methods known in the art, the triplet generated may be <woman, hold, bread>. Again, while this triplet does correctly describe the scene, it lacks contextual information.

In contrast, in Figure 18b the method disclosed herein may generate the triplet 1820a <woman, sells, bread>. The predicate "sell" is more relevant to the scene and captures the context in the image. As shown, the domain 1815a "shopping" may be input into the model.

The inventors found that the scene graph generation method with more semantically meaningful predicates may be used for, for example, surveillance purposes for videos at different scenarios (e.g., airport, shopping malls, etc). Instead of continuous monitoring of videos, a scene graphs can automate any anomaly detection with reasoning as well as save time. The inventor's model may give more accurate interactions based on the knowledge of the scene input compared to other known methods. Hence, anomaly detection in surveillance may be improved. For example, an alert, for instance a flashing light or sound, may be triggered when an anomaly is detected. The scene graph method may take contiguous or non-contiguous stills from a video and determine any anomalies or changes in a relation linking two items. If an anomaly or change is detected, the method may output an alert.

Further, the scene graph generation method may be used for interactive image editing with more fine-controlled object interactions. General known methods often capture too descriptive or inaccurate object interactions, which leads to inconsistent / poor controlled image editing. The inventor's method may enable consistent and precise image editing.

The scene graph generation method may be used with a product recommendation system and enable a more controlled search. For example, general methods often capture non-semantic information and give vague recommendations to users. However, the method disclosed herein may control the exact information needed for recommendations for the user.

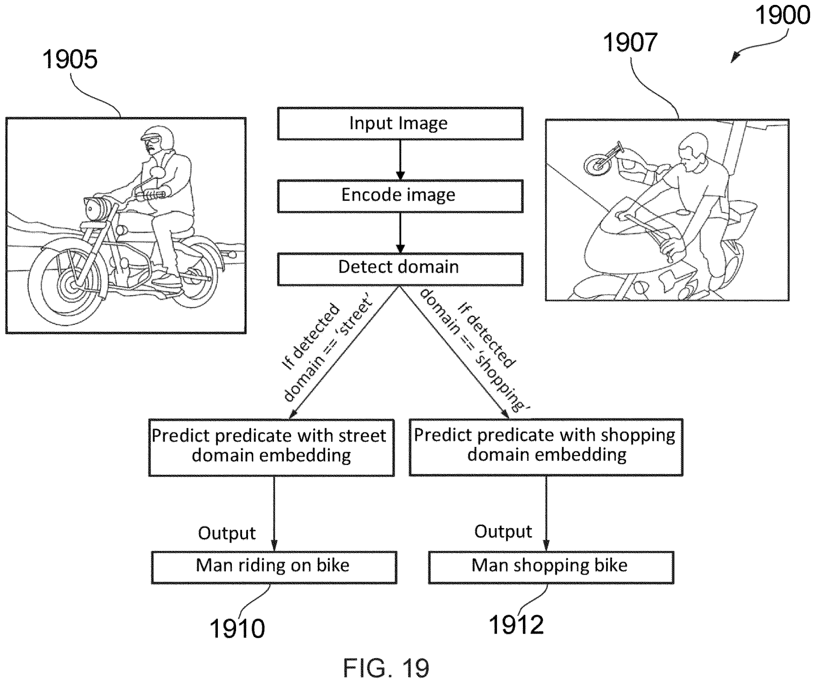

**Figure 19** shows another example 1900 of scene graph triplet generation using the method disclosed herein. This example shows two different input images 1905, 1907 related to motorbike. However, a first input image 1905 shows a man riding a bike on the road while the second input image 1907 shows a man shopping for a bike in a showroom. The inventors found the known methods would generate the same predicate for both input images, that predicate being <man, on, bike>.

The inventors' method uses the domain of the image to generate more meaningful and contextually relevant predicates. For example, for the first image, the domain predictor may predict that the domain is "street" and therefore generate the street triplet 1910 <man, riding on, bike>. For the second image, the domain predictor may predict the that the domain is "shopping" and therefore generate the shopping triplet 1912 <man, shopping, bike>. Alternatively, the domain name may be input into a large language model to generate the domain embedding.

**Figure 19** shows a graphical user interface (GUI) 2000 which a user may interact with to generate a scene graph triplet. An input space of the GUI may display an "upload image" button 2005, an optional input "feed domain name" button 2010 and a "generate triplet" button 2015. A user interacting with the GUI may click the upload image button and upload an image. Hence, the input buttons may have the following functionality; Upload button : Clickable button to upload image; Feed domain name : Textual input button, by default the input taken will be None, else user can input their text in the box; Generate triplet: Clickable button to generate output

Additionally, a domain name may optionally be fed into the GUI. For example, the domain name may be input by user input from a keyboard and/or a domain name may be selected from a dropdown menu with a list of domain names. If a domain name is not fed into the GUI, the model may use the domain predictor module 2 to generate the domain embedding. That is, a domain embedding may be generated from global information of the image. If a domain is fed to the GUI the model may pass the text to an LLM and the use a generated embedding from the LLM as the domain embedding. That is, if a domain is fed to the GUI the model may use the domain predictor module 1 described above.

Once an image has been uploaded and a domain name has optionally been input, a user may interact with the "generate triplet" button to generate the structured text as a triplet and display an output.

The figure shows an example output space which may be output by the GUI. The output may display the input image 2007, bounding boxes 2010a, 2010b, 2010c surrounding identified objects in the image, and the structured text triplet(s) 2015. The output space may visually link an object in the bounding box with the corresponding portion of a triplet. In this example the text triplets are output below the image and are underlined, with the 'dashing' of the underlining (i.e. solid line, square dots, dashed) linking the bounding boxes and associated object. In another example, the text may include arrows linking the text with an object and/or may be displayed in a graph format with objects as nodes and relations linking objects as vertices.

The GUI may include additional buttons (not shown) which a user may interact with. For example, the additional buttons may include a save button which downloads the output image along with bounding boxes and triplets, as for example, a PNG image; and a share button which allows a user to share the output with other users.

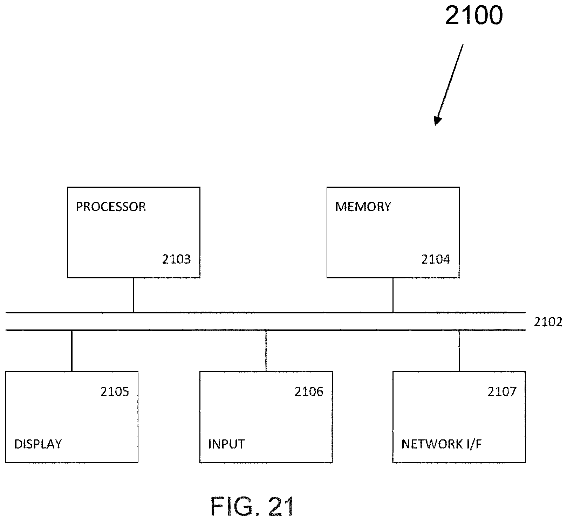

**Figure 21** is a block diagram of an information processing apparatus 2100 or a computing device 2100, such as a data storage server, which embodies the present invention, and which may be used to implement some or all of the operations of a method embodying the present invention, and perform some or all of the tasks of apparatus of an embodiment. The computing device 2100 may be used to implement any of the method steps described above, e.g. any of steps S510-S550 and/or S1210 - S1270 and/or S1205-S1275 and/or s1710-s1750 for example.

The computing device 2100 comprises a processor 2103 and memory 2104. Optionally, the computing device also includes a network interface 2107 for communication with other such computing devices, for example with other computing devices of invention embodiments. Optionally, the computing device also includes one or more input mechanisms such as keyboard and mouse 2006, and a display unit such as one or more monitors 2105. These elements may facilitate user interaction. The components are connectable to one another via a bus 2102.

The memory 2104 may include a computer readable medium, which term may refer to a single medium or multiple media (e.g., a centralized or distributed database and/or associated caches and servers) configured to carry computer-executable instructions. Computer-executable instructions may include, for example, instructions and data accessible by and causing a computer (e.g., one or more processors) to perform one or more functions or operations. For example, the computer-executable instructions may include those instructions for implementing a method disclosed herein, or any method steps disclosed herein, for example any of steps S510-S550. Thus, the term "computer-readable storage medium" may also include any medium that is capable of storing, encoding or carrying a set of instructions for execution by the machine and that cause the machine to perform any one or more of the method steps of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 2103 is configured to control the computing device and execute processing operations, for example executing computer program code stored in the memory 2104 to implement any of the method steps described herein. The memory 2104 stores data being read and written by the processor 2103 and may store at least one feature extractor and/or pretrained image encoder and/or domain conditioned decoder and/or domain prediction module and/or input image and/or at least one classifier and/or triplet matching unit and/or other data, described above, and/or programs for executing any of the method steps described above. These entities may be in the form of code blocks which are called when required and executed in a processor.

As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein. The processor 2003 may be considered to comprise any of the units, or modules, described above. Any operations described as being implemented by a unit may be implemented as a method by a computer and e.g. by the processor 2103.

For training the model described herein, the inventors used 1 Nvidia A30 GPU with 24GB RAM. The processor used was an Intell XeonI Silver 4314 CPU with 256GB RAM. Inferences were performed on the same system. The inventors also successfully tested the model in a CPU based system with Intell Corel i5 processor with at least 32GB RAM, preferably with 16GB GPU for accelerated training/testing. The inventors found that a recommended minimum hardware requirements for the system disclosed herein for training/testing may require an intel i5 processor with at least 32GB RAM, preferably with 16GB GPU for accelerated training/testing.

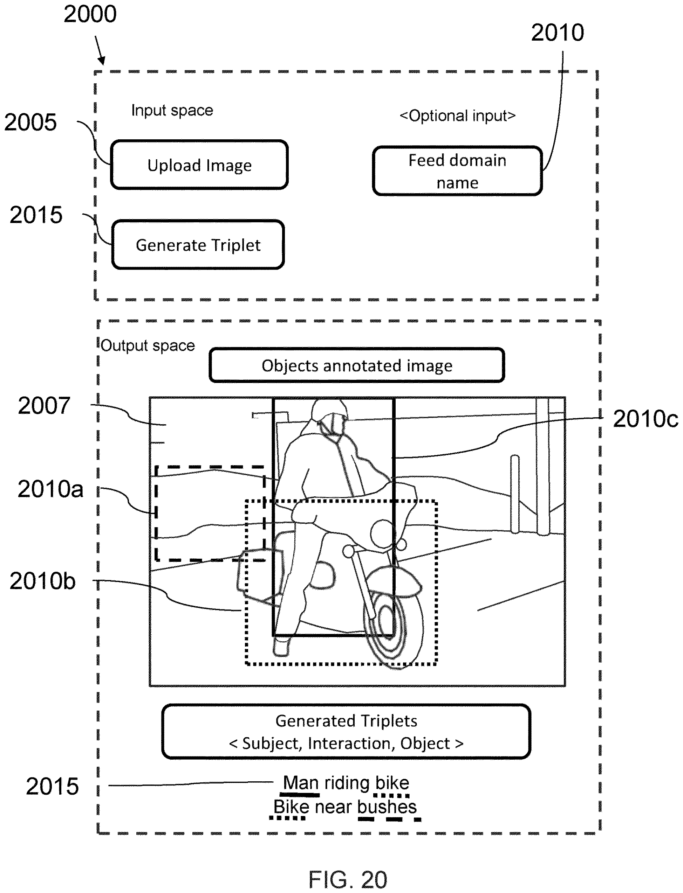

The display unit 2105 may display a representation of data stored and/or generated by the computing device, such as a generated scene graph, generated image with scene graph, generated scene graph triplet and/or GUI windows (such as the GUI shown in Figure 20) and/or interactive representations enabling a user to interact with the apparatus 2100 by e.g. selection interaction, input text boxes, and/or any other output described above such as an option to input an image, and may also display a cursor and dialog boxes and screens enabling interaction between a user and the programs and data stored on the computing device. The input mechanisms 2106 may enable a user to input data and instructions to the computing device, such as enabling a user to input any user input described above. For example, the display unit may display a GUI including a User panel, or input space, for the user to interact with as described herein. The user may select an input image for a scene graph to be generated in relation to. The user may interact with the GUI and display to generate and view a scene graph for the image.

The network interface (network I/F) 2107 may be connected to a network, such as the Internet, and is connectable to other such computing devices via the network. The network I/F 2107 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device/apparatus 2100 such as that illustrated in Figure 21. Such a computing device need not have every component illustrated in Figure 21 and may be composed of a subset of those components. For example, the apparatus 2100 may comprise the processor 2103 and the memory 2104 connected to the processor 2103. Or the apparatus 2100 may comprise the processor 2103, the memory 2104 connected to the processor 2103, and the display 2105. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data. For example, the image encoder and/or decoder and/or domain predictor may be stored on a separate server from other units.

The invention may be implemented in digital electronic circuitry, or in computer hardware, firmware, software, or in combinations of them. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

The system described herein was developed in the python programming language with with Pytorch and huggingface APIs. Additional libraries in python were also used such as NumPy, cv2 and plotly for data handling and visualizations. Of course, any suitable programming langue may be used.

Method steps of the invention may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random-access memory or both. The essential elements of a computer are a processor for executing instructions coupled to one or more memory devices for storing instructions and data.

The above-described embodiments of the present invention may advantageously be used independently of any other of the embodiments or in any feasible combination with one or more others of the embodiments.

**Claims**

1. A computer implemented method for generating structured text describing an image comprising:

    extracting items from the image;
    encoding the extracted items;
    generating a domain embedding from a predicted domain of the image;
    predicting a relation between two items in the image by decoding the encoded extracted items and the domain embedding; and
    classifying the two items and the predicted relation to form the structured text as a triplet.

2. The method of claim 1, wherein predicting a relation between two items in the image comprises:

    generating a predicate embedding from the encoded extracted items;

concatenating the domain embedding with the predicate embedding to generate an enhanced predicate embedding; and

predicting the relation from the enhanced predicate embedding.

3. The method according to claim 1, wherein predicting a relation between two items in the image comprises:

using a self-attention mechanism to condition learnable queries on the domain embedding;

inputting the conditioned learnable queries and encoded extracted items into a cross-attention mechanism to generate an enhanced predicate embedding; and

predicting the relation from the enhanced predicate embedding.

4. The method according to any preceding claim, wherein the predicted domain of the image is generated from global information of the image, preferably wherein the predicted domain is predicted using a trained neural network.

5. The method according to claim 4, wherein the global information comprises a head token of the image generated by the image encoder.

6. The method according to any of claims 4 or 5, wherein the trained neural network is a domain predictor unit comprising a multilayer perceptron, MLP, neural network, preferably wherein the MLP comprises three layers.

7. The method according to claim 6, wherein the domain predictor unit is trained using a linear layer, wherein weights of the domain predictor and linear layer are updated using a loss computation between a ground truth domain class and a domain class generated from the domain embedding, preferably wherein the ground truth domain class and the domain class loss computation comprises a one hot coding format.

8. The method according to claim 6, wherein the domain predictor unit is trained using a pretrained large language model, LLM, wherein weights of the domain predictor are updated by computing a similarly metric between the domain embedding and a ground truth domain embedding generated by the LLM from a user input domain name, and minimising a loss function determined from the similarly metric.

9. The method according to any of claim 1 to 4, wherein the predicted domain of the image is input by a user into a trained large language model, LLM, neural network as a domain name and the LLM generates the domain embedding.

10. The method according to any preceding claim, wherein the predicted domain imports further information not directly from the image to capture a context of the image based on an overall impression of the image.

11. The method according to any preceding claim, wherein the image is input by a user entry on a graphical user interface, GUI, and/or the method outputs the structured text as a scene graph triplet on a user display.

12. The method according to claim 11, wherein the scene graph triplet on the user display is represented as an overlay on the image with bounding boxes around items in the image to indicate a subject and an object and a link between the subject and the object, optionally wherein the subject and/or object and/or link are labelled.

13. The method according to any preceding claim, wherein the method detects interactions between two items in the image and further comprises:

inputting a further image, wherein two items in the further image are the same as the two items in the image; and

comparing the predicted relations between the two items in each of the image and the further image to detect an interaction between the two items in the image; and

optionally outputting an alert if the predicted relations are different.

14. A computer program which, when run on a computer, causes the computer to carry out a method for generating structured text describing an image comprising:

extracting items from the image;

encoding the extracted items;

generating a domain embedding from a predicted domain of the image;

predicting a relation between two items in the image by decoding the encoded extracted items and the domain embedding; and

classifying the two items and the predicted relation to form the structured text as a triplet.

15. An information processing apparatus for training a neural network to generate structured text describing an image comprising a memory and a processor connected to the memory, wherein the processor is configured to:

extract items from the image;

**EP 4 604 080 A1**

encode the extracted items;
generate a domain embedding from a predicted domain of the image;
predict a relation between two items in the image by decoding the encoded extracted items and the domain embedding; and
classify the two items and the predicted relation to form the structured text as a triplet.

Detection prediction : [human, on, bike]

Detection target : [human, parking, bike]

Output

Input

100

110

115

120

125

135

105

**FIG. 1**

Previous method 1

FIG. 2

EP 4 604 080 A1

Previous method 2

300

305  310  315

Input

Feature extractor

Transformer Encoder

Context module

320

330

Output

<human, riding, bike>

Object decoder

All predicted object representations

All predicted predicate representations

317

Predicate decoder 1

Transformer Encoder

Predicate decoder 2

Refined Predicate

Triplet matching

316  318  319  321  325

FIG. 3

EP 4 604 080 A1

FIG. 4

500

S510

extracting items from an image

S520

encoding the extracted items

S530

generating a domain embedding from a predicted domain of the image;

S540

predicting a relation between two items in the image by decoding the encoded extracted items and the domain embedding

S550

classifying the two items and the predicted relation to form the structured text as a triplet.

FIG. 5

Figure 6

FIG. 6

FIG. 7

FIG. 8

EP 4 604 080 A1

900

925

927

Input

Image
Encoder

Domain conditioned decoder

Decoder

①  ③

②

Predicate
classifier

920

Domain
Predictor

① → Image decoder output – Embedding space vector of 256 dimension

② → Domain predictor output – Embedding space vector of 256 dimension

③ → Conditioned decoder output – Embedding space vector of 512 dimension,
concatenating 1 & 2

FIG. 9

FIG. 10

FIG. 11

**Training step 1 (domain predictor)** 1201   1200

**Training step 2 (decoder and classifier)** 1202

Start

s1210 — Load training data, and pretrained feature extractor, image encoder, decoder, classifier

s1220 — Encode the input image using image encoder

s1230 — Use Domain predictor block to generate domain embedding

s1240 — Pass domain embedding through linear layer to classify domain

Pass domain name to LLM and compute similarity with domain embedding

s1260 — Computer error

s1270 — Is error merged?

No

Yes

End

s1250

Start

s1205 — Load training data, and pretrained feature extractor, image encoder, decoder, domain predictor, classifier

s1215 — Encode the input image

s1225 — Generate domain embedding from domain predictor block

s1235 — Decoder provides predicate embeddings conditioned on domain embedding

s1245 — Predicate classifier classifies the predicates from embedding

s1255 — Triplet matching

s1265 — Computer error

s1275 — Is error merged?

No

Yes

End

FIG. 12

FIG. 13

FIG. 14

FIG. 15

EP 4 604 080 A1

FIG. 16

1700

Test

Start

s1710 — Load an image

s1720 — Encode the input image

s1730 — Predict domain and generate domain embedding

s1740 — Predict object, subject and predicate category

s1750 — Triplet matching

End

FIG. 17

1800a

1805a

Existing
method

<man, on, bike>  1810a

Proposed
method

Domain:
street

1815a

<man, riding on, bike>

1820a

FIG. 18a

1800b

1805b

Existing
method

<Woman, hold, bread>  1810b

Proposed
method

Domain:
shopping

1815b

<Woman, sell, bread>

1820b

FIG. 18b

FIG. 19

2000

2010

2005

Input space

<Optional input>

Upload Image

Feed domain name

2015

Generate Triplet

Output space

Objects annotated image

2007

2010c

2010a

2010b

Generated Triplets
< Subject, Interaction, Object >

2015

Man riding bike
Bike near bushes

FIG. 20

2100

PROCESSOR

2103

MEMORY

2104

2102

2105

DISPLAY

2106

INPUT

2107

NETWORK I/F

FIG. 21

Europäisches
Patentamt
European
Patent Office
Office européen
des brevets

# EUROPEAN SEARCH REPORT

**Application Number**

EP 24 19 2036

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CONG YUREN ET AL: "RelTR: Relation Transformer for Scene Graph Generation", IEEE TRANSACTIONS ON PATTERN ANALYSIS AND MACHINE INTELLIGENCE, IEEE COMPUTER SOCIETY, USA, vol. 45, no. 9, 18 April 2023 (2023-04-18), pages 11169-11183, XP011946707, ISSN: 0162-8828, DOI: 10.1109/TPAMI.2023.3268066 [retrieved on 2023-04-19] * the whole document * | 1-15 | INV. G06V10/82 |
| A | CN 116 524 513 A (UNIV SCIENCE & TECHNOLOGY CHINA) 1 August 2023 (2023-08-01) * the whole document * | 1-15 | |
| A | CN 116 932 824 A (UNIV SHANXI) 24 October 2023 (2023-10-24) * the whole document * | 1-15 | |
| | | | TECHNICAL FIELDS SEARCHED (IPC) |
| | | | G06V |

The present search report has been drawn up for all claims

| Place of search | Date of completion of the search | Examiner |
|---|---|---|
| The Hague | 10 January 2025 | Stan, Johann |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 19 2036

This annex lists the patent family members relating to the patent documents cited in the above-mentioned European search report.
The members are as contained in the European Patent Office EDP file on
The European Patent Office is in no way liable for these particulars which are merely given for the purpose of information.

10-01-2025

| Patent document cited in search report | Publication date | Patent family member(s) | Publication date |
|---|---|---|---|
| CN 116524513 A | 01-08-2023 | NONE | |
| CN 116932824 A | 24-10-2023 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Panoptic scene graph generation. **YANG, J.** ; **ANG, Y.Z.** ; **GUO, Z.** ; **ZHOU, K.** ; **ZHANG, W.** ; **LIU, Z.** European Conference on Computer Vision. Springer Nature, October 2022, 178-196
- Dual-branch hybrid learning network for unbiased scene graph generation. **ZHENG, C.** ; **GAO, L.** ; **LYU, X.** ; **ZENG, P.** ; **EL SADDIK, A** ; **SHEN, H.T.** IEEE Transactions on Circuits and Systems for Video Technology. 2023
- **HE, K.** ; **ZHANG, X** ; **REN, S.** ; **SUN, J.** Deep residual learning for image recognition.. *Proceedings of the IEEE conference on computer vision and pattern recognition*, 2016, 770-778

- **TAMURA, M** ; **OHASHI, H.** ; **YOSHINAGA, T**. Qpic: Query-based pairwise human-object interaction detection with image-wide contextual information.. *Proceedings of the IEEE/CVF Conference on Computer Vision and Pattern Recognition*, 2021, 10410-10419
- End-to-end object detection with transformers.. **CARION, N** ; **MASSA, F.** ; **SYNNAEVE, G.** ; **USUNIER, N.** ; **KIRILLOV, A** ; **ZAGORUYKO, S.** European conference on computer vision. Springer International Publishing, August 2020, 213-229
- **H. W. KUHN** ; **BRYN YAW**. The Hungarian method for the assignment problem.. *Naval Res. Logist. Quart*, 1955, 83-97